# EUROPEAN PATENT APPLICATION

(11) **EP 3 826 290 A1**
(43) Date of publication of application: **26.05.2021**
(21) Application number: 19838306.9
(22) Date of filing: 03.07.2019
(51) Int. Cl.: H04N 5/232, G09G 5/00, G09G 5/10, G09G 5/36, H04N 17/00

(54) **HEAD MOUNT DISPLAY AND CONTROL METHOD OF HEAD MOUNT DISPLAY, INFORMATION PROCESSING DEVICE, DISPLAY DEVICE, AND PROGRAM**

(30) Priority: 17.07.2018 JP 2018133843
(71) Applicant: Sony Corporation, 108-0075 Tokyo (JP)
(72) Inventor: TOKUNAGA Makoto Daniel, Tokyo 108-0075 (JP); HOMMA Shunichi, Tokyo 108-0075 (JP); KAINO Akihiko, Tokyo 108-0075 (JP); ESHIMA Masashi, Tokyo 108-0075 (JP); DOBA Kentaro, Tokyo 108-0075 (JP)
(74) Representative: 2SPL Patentanwälte PartG mbB
(86) International application number: PCT/JP2019/026417
(87) International publication number: WO 2020/017327

(57) **Abstract**

The present disclosure relates to an HMD, a control method for the head mounted display, an information processor, a display device, and a program that make it possible to estimate camera parameters of a camera mounted in the HMD without the awareness of a user wearing the HMD.

At a timing when the HMD is displaying content including a VR image or an AR image, the camera mounted in the HMD captures an image of a calibration pattern displayed on an external display, executes calibration on the basis of the captured image of the calibration pattern, and estimates the camera parameters. At this time, the calibration pattern displayed on the external display is displayed with dimensions according to a positional relationship between the HMD and the external display. The present disclosure is applicable to the HMD.

## Description

### TECHNICAL FIELD

The present disclosure relates to a head mounted display, a control method for the head mounted display, an information processor, a display device, and a program, and relates to a head mounted display, a control method for the head mounted display, an information processor, a display device, and a program that make it possible to perform calibration without the awareness of a user and appropriately estimate camera parameters especially in a home environment.

### BACKGROUND ART

In a setup including a camera, distortion of an optical system, deviation in an imaging direction, and the like occur, and parameters for dealing with the distortion and deviation are measured (estimated) in advance, whereby an appropriate image can be obtained by application of the parameters to a captured image.

The existing methods of parameter estimation in this setup often assume only one initial measurement. Among those, a known pattern on a display or the like is imaged by a camera, and parameters are estimated on the basis of the imaging result.

For example, there has been proposed a technology in which a known pattern is displayed on a display device, and a captured image obtained by imaging the displayed known pattern is used to achieve camera calibration (see Patent Document 1.).

However, when a deformation or change occurs in the setup thereafter, calibration is required again in those methods.

That is, in a case where calibration is performed in a factory or the like, when a camera setup is deformed due to an impact or the like in a home environment such as a user's home after shipment, re-shipment to the factory is necessary in order to perform the calibration again. To avoid such a situation, it is necessary for the user to perform calibration in a home environment (in a home-based environment) so that these parameters can be estimated again.

### CITATION LIST

### PATENT DOCUMENT

Patent Document 1: Japanese Patent Application Laid-Open No. 2000-350239

### SUMMARY OF THE INVENTION

### PROBLEMS TO BE SOLVED BY THE INVENTION

However, some existing methods assuming the home environment have required special objects for parameter estimation to be prepared separately. In addition, with many methods requiring a process including special procedures, there has been a possibility that the user dislikes executing these processes and does not perform calibration itself.

Further, in Patent Document 1, there has been a possibility that a change in the imaged known pattern may not be handled due to a situation such as a positional relationship between the user and the display, and the camera parameters may not be able to be estimated appropriately.

The present disclosure has been made in view of such circumstances, and calibration is performed without the awareness of the user, and camera parameters are estimated appropriately especially in a home environment.

### SOLUTIONS TO PROBLEMS

A head mounted display of one aspect of the present disclosure is a head mounted display including: a display unit; an imaging unit that images an outside; and a calibration processing unit that generates a calibration image suitable for calibration and causes external display equipment to display the calibration image.

A control method for a head mounted display of one aspect of the present disclosure is a control method for a head mounted display including a display unit and an imaging unit that images an outside, the method including a calibration process of generating a calibration image suitable for calibration and causing external display equipment to display the calibration image.

A program of one aspect of the present disclosure is a program for causing a computer controlling a head mounted display, which includes a display unit and an imaging unit that images an outside, to function as a calibration processing unit that generates a calibration image suitable for calibration and causes external display equipment to display the calibration image.

An information processor of one aspect of the present disclosure is an information processor for supplying content to a head mounted display including a display unit and an imaging unit that images an outside, the information processor including a calibration processing unit that generates a calibration image suitable for calibration and causes external display equipment to display the calibration image.

A display device of one aspect of the present disclosure is a display device for displaying a calibration image of an imaging unit that images an outside in a head mounted display including a display unit and the imaging unit, the display device including a calibration processing unit that generates a calibration image suitable for calibration and causes the display device to display the calibration image.

In one aspect of the present disclosure, a calibration image suitable for calibration is generated and displayed on external display equipment.

### EFFECTS OF THE INVENTION

According to one aspect of the present disclosure, calibration can be performed without the awareness of the user, and camera parameters can be appropriately estimated especially in a home environment.

### BRIEF DESCRIPTION OF DRAWINGS

Fig. 1 is an exemplary view for explaining a configuration example of a calibration system of the present disclosure.
Fig. 2 is a view for explaining an overview of a calibration process according to a first embodiment of the present disclosure.
Fig. 3 is a view for explaining an example of display of a calibration pattern according to the distance between an HMD and a display device.
Fig. 4 is a view for explaining an example of display of a calibration pattern according to a positional relationship between the HMD and the display device.
Fig. 5 is a diagram for explaining a configuration example of the HMD of the first embodiment.
Fig. 6 is a diagram for explaining a configuration example of an information processor of the first embodiment.
Fig. 7 is a diagram for explaining a configuration example of the display device of the first embodiment.
Fig. 8 is a flowchart for explaining the calibration process of the first embodiment.
Fig. 9 is a flowchart for explaining a calibration pattern display state confirmation process according to the first embodiment.
Fig. 10 is a view for explaining an overview of a first modification.
Fig. 11 is a flowchart for explaining a calibration pattern display state confirmation process according to the first modification.
Fig. 12 is a view for explaining an overview of a second modification.
Fig. 13 is a flowchart for explaining a calibration process of the second modification.
Fig. 14 is a view for explaining an overview of a third modification.
Fig. 15 is a flowchart for explaining a calibration pattern display state confirmation process according to the third modification.
Fig. 16 is a diagram for explaining a configuration example of an information processor according to a second embodiment.
Fig. 17 is a flowchart for explaining a calibration process of the second embodiment.
Fig. 18 is a diagram for explaining a configuration example of a display device of a third embodiment.
Fig. 19 is a flowchart for explaining a calibration process of the third embodiment.
Fig. 20 is a diagram for explaining a configuration example of a general-purpose personal computer.

### MODE FOR CARRYING OUT THE INVENTION

Preferred embodiments of the present disclosure will now be described in detail with reference to the accompanying drawings. Note that in the present specification and drawings, components having substantially the same functional configuration are denoted by the same reference numerals, and redundant descriptions thereof will be omitted.

Modes for carrying out the present technology will be described below. The description will be performed in the following order:
1. Overview of calibration system of present disclosure
2. First Embodiment
3. First modification
4. Second modification
5. Third modification
6. Second Embodiment
7. Third Embodiment
8. Example of execution by software

### <<1. Overview of calibration system of present disclosure>>

### <Configuration example of calibration system>

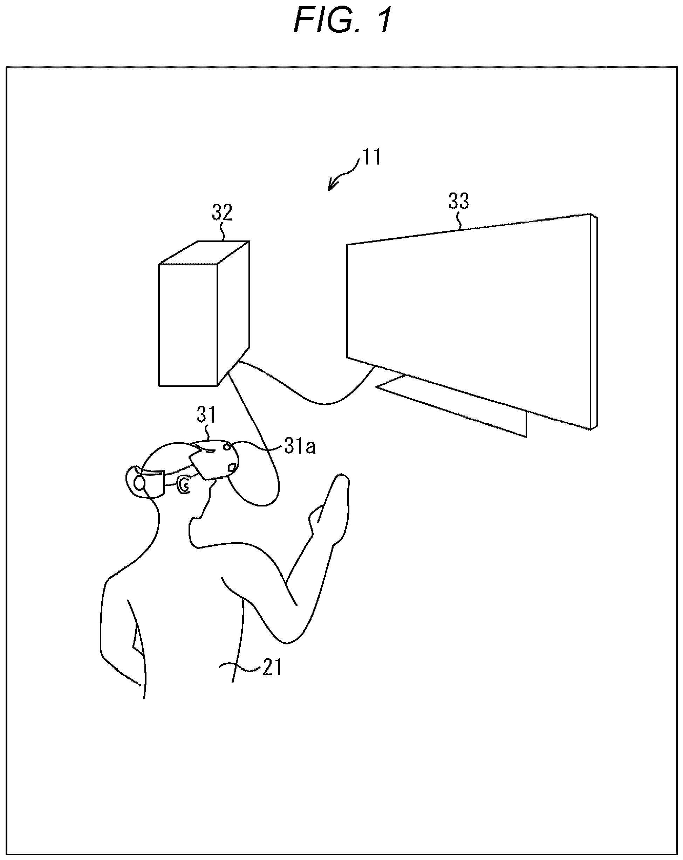

Referring to Fig. 1, an overview of a calibration system to which the technology of the present disclosure is applied will be described.

Fig. 1 shows a configuration example of a calibration system of the present disclosure. A calibration system 11 shown in Fig. 1 is a system made up of a head mounted display (HMD) 31, an information processor 32, and a display device 33 including a display, in which camera parameters of a camera 31a provided in the HMD 31 is estimated (measured) by calibration.

The calibration system 11 of Fig. 1 functions as a device for displaying content, such as a game machine, for example, in normal operation More specifically, the information processor 32 outputs content including a virtual reality (VR) image or an augmented reality (AR) image to the HMD 31 worn by the user 21 for display.

Further, the calibration system 11 performs calibration of the camera 31a mounted in the HMD 31 without the awareness of the user, while the user views an image displayed on the mounted HMD 31, for example, while the user enjoys a game, and the calibration system 11 estimates (measures) the camera parameters of the camera 31a.

That is, the calibration system 11 executes a calibration process in the background while achieving the original function as a game machine.

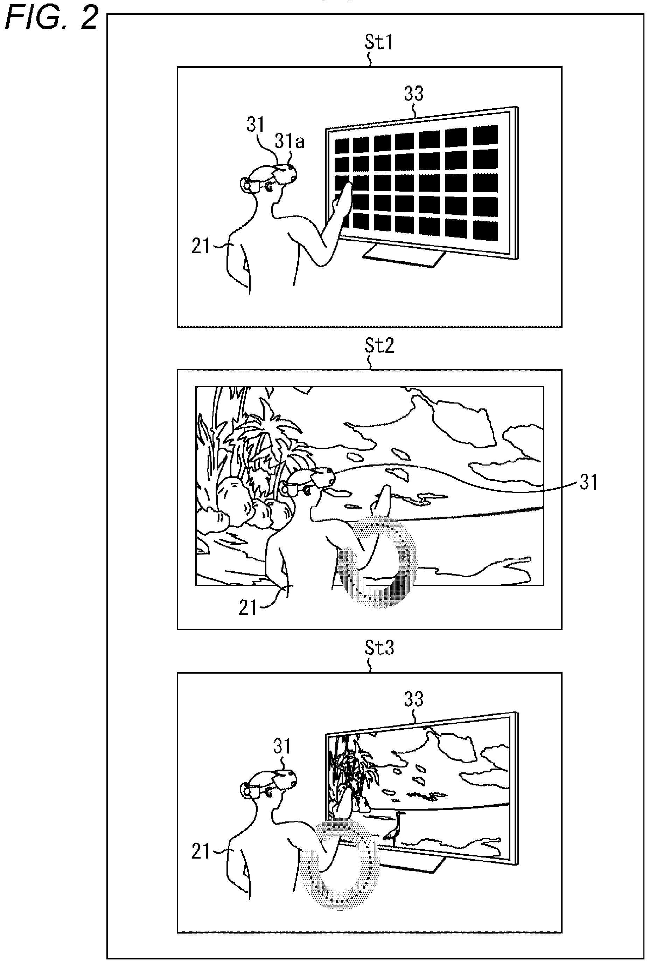

More specifically, for example, as shown by a state St1 in Fig. 2, at the time of executing the calibration process, the calibration system 11 displays, for example, an image of a plurality of square-shaped markers or an image of a checker flag pattern as a calibration pattern which is for performing calibration on the display device 33 and in which where to display at what position on the display device 33 is known. Note that the shape of the marker may be a predetermined shape except for a square, or may be a known color arrangement pattern, for example, as long as being a known shape.

At this time, the camera 31a of the HMD 31 captures an image of the calibration pattern displayed on the display device 33, and the HMD 31 estimates (measures) the camera parameters of the camera 31a on the basis of the image of the calibration pattern captured by the camera 31a.

Also, at the time of executing the calibration process, the HMD 31 of the calibration system 11 simultaneously displays and presents, to the user 21, a VR image as shown by a state St2 in Fig. 2 and an AR image as shown by a state St3 in Fig. 2.

Thus, the calibration system 11 executes the calibration process in the background while functioning as a game machine and estimates (measures) the camera parameters of the camera 31a.

The camera parameters to be obtained here are, for example, the information of the position and orientation of the setup of the camera 31a starting from the display device 33, information of internal parameters (distortion, focal length, optical center, etc.) of the camera 31a, the information of the position and orientation between the cameras 31a in a case where there is a plurality of cameras 31a, color information including the white balance of the camera 31a, and the like. However, in a case where the camera parameters of the color information including the white balance are estimated (measured), the calibration pattern needs to be, for example, an RGB image.

As a result, while the user 21 wears the HMD 31 and enjoys the game using the information processor 32, the calibration can be performed with the user 21 being unaware of the calibration, and the camera parameters can be estimated (measured) appropriately.

Note that as shown by the states St2 and St3 in Fig. 2, a state in which a VR image is displayed or a state in which an AR image is displayed shows the image of an image to be viewed by the user wearing the HMD 31 and is different from the actual display state.

### <Example of display of calibration pattern according to the distance between HMD and display>

The camera 31a provided in the HMD 31 images the front direction of the face of the user 21 wearing the HMD 31, for example. Therefore, as shown in Fig. 1, when the user 21 turns the face to the direction of the display device 33 with the HMD 31 worn on the head of the user 21, the display device 33 is imaged.

Further, a display (not shown) is provided in the HMD 31 so as to cover the eyes of the user 21 when the HMD 31 is put on the head of the user 21, and a VR image or an AR image as content of a game or the like is displayed on the display.

With such a configuration, the operation in which the user 21 views the VR image or the AR image displayed on the HMD 31 and the operation in which the camera 31a images the front direction of the user 21 are completely independent of each other, but the viewing direction and the imaging direction change in conjunction with the operation of the user 21.

Furthermore, with the configuration described above, the user 21 may not be able to recognize the positional relationship between the viewing direction of the user 21 and the display device 33 while wearing the HMD 31, and hence the positional relationship between the camera 31a and the display device 33 is assumed to be in various states.

For example, in a case where the front direction of the face of the user 21 wearing the HMD 31 and the display surface of the display device 33 face each other, the calibration pattern displayed on the display device 33 imaged by the camera 31a varies between when the HMD 31 and the display device 33 are present at a position closer to each other than a predetermined distance and when the HMD 31 and the display device 33 are present at a position farther from each other than the predetermined distance.

That is, in a case where the front direction of the face of the user 21 wearing the HMD 31 and the front direction of the display surface of the display device 33 face each other and when the HMD 31 and the display device 33 are present at the predetermined distance from each other, the dimensions of the marker constituting the calibration pattern imaged by the camera 31a are an appropriate size, and the boundaries of a plurality of markers can be recognized appropriately.

Note that although the calibration pattern will be described as an image in which a plurality of square-shaped markers is arranged, the calibration pattern may be another image and may, for example, be an image of a checker flag pattern in which a plurality of square-shaped markers of white and black is arranged alternately in a densely packed state.

In contrast, in a case where the front direction of the face of the user 21 wearing the HMD 31 and the front direction of the display surface of the display device 33 face each other and the HMD 31 and the display device 33 are present at positions farther from each other than the predetermined distance, the dimensions of the marker constituting the calibration pattern imaged by the camera 31a become smaller than when the HMD 31 and the display device 33 are present at positions at the predetermined distance from each other, and there is a possibility that the position of the marker cannot be appropriately recognized because, for example, the boundary of the marker is collapsed, or the like.

When the position of the marker (the position of the boundary, especially in the case of the square-shaped marker) comes into a state not appropriately recognizable, there is a possibility that appropriate camera parameters may not be able to be estimated (measured) by calibration.

Therefore, in the calibration system 11 of Fig. 1, the size of the marker constituting the calibration pattern displayed on the display device 33 is changed and displayed in accordance with the distance between the HMD 31 and the display device 33.

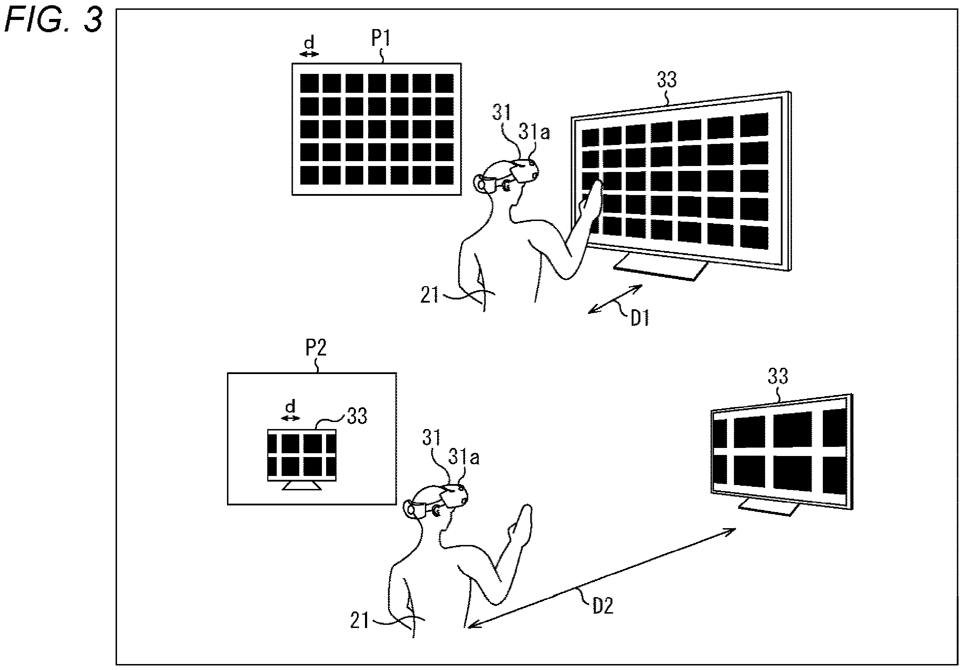

That is, as shown in the upper portion of Fig. 3, in a case where the distance between the HMD 31 and the display device 33 is the predetermined distance D1, the image of the display device 33 captured by the camera 31a becomes, for example, an image P1. In the case of the image P1, it is assumed that the square-shaped markers constituting the calibration pattern are arranged in an array, and the horizontal size of the markers is a default size d and appropriate for the estimation (measurement) of the camera parameters.

In contrast, in a case where the distance between the HMD 31 and the display device 33 is greater than the predetermined distance, there is a possibility that the horizontal size of the marker constituting the calibration pattern may become smaller than the size d and may become an inappropriate size for estimating (measuring) the camera parameters.

Therefore, in the calibration system 11 of Fig. 1, the size of the marker constituting the calibration pattern is changed in accordance with the distance between the HMD 31 and the display device 33. That is, for example, as shown in the lower portion of Fig. 3, in a case where the distance between the HMD 31 and the display device 33 is a distance D2 that is greater than the predetermined distance D1, an image captured by the camera 31a is displayed with a larger horizontal size of the marker constituting the calibration pattern so as to be, for example, an image P2.

In this way, the size d of the marker constituting the calibration pattern in the image P2 becomes a similar size d to the size when the distance between the HMD 31 and the display device 33 is the distance D1, as shown in the upper portion of Fig. 3, and can be set to a size appropriate for estimating (measuring) the camera parameters.

Thus, the size of the marker constituting the calibration pattern can be made an appropriate size regardless of the distance between the HMD 31 and the display device 33, so that the calibration pattern of an appropriate size can be displayed regardless of the distance between the HMD 31 and the display device 33.

As a result, the camera parameters can be estimated (measured) appropriately.

### <Example of display of calibration pattern according to positional relationship between HMD imaging direction and display>

Further, for example, in a case where the front direction of the face of the user 21 wearing the HMD 31 and the front direction of the display surface of the display device 33 do not face each other, and, for example, the camera 31a of the HMD 31 images the display device 33 from either the right or left oblique directions with respect to the front direction of the display device 33, a change occurs in the calibration pattern imaged by the camera 31a and displayed on the display device 33 in accordance with the positional relationship between the imaging direction of the HMD 31 and the display device 33.

That is, in a case where the display device 33 is imaged from either the right or left oblique direction as the front direction of the face of the user 21 wearing the HMD 31 images the display device 33 with respect to the front direction of the display surface of the display device 33, the horizontal size of the marker constituting the calibration pattern is smaller than in a case where the imaging is performed from the front direction.

As a result, the horizontal dimension of the marker constituting the calibration pattern imaged by the camera 31a becomes smaller, and it is conceivable that the position of the marker cannot be appropriately recognized because, for example, the boundary of the marker of the imaged calibration pattern is collapsed, or the like.

When the position of the marker cannot be appropriately recognized, there is a possibility that appropriate camera parameters may not be able to be obtained by the calibration process.

Therefore, in the calibration system 11 shown in Fig. 1, the horizontal size of the marker constituting the calibration pattern displayed on the display device 33 is changed in accordance with the positional relationship between the front direction of the face of the user 21 wearing the HMD 31 and the front direction of the display surface of the display device 33.

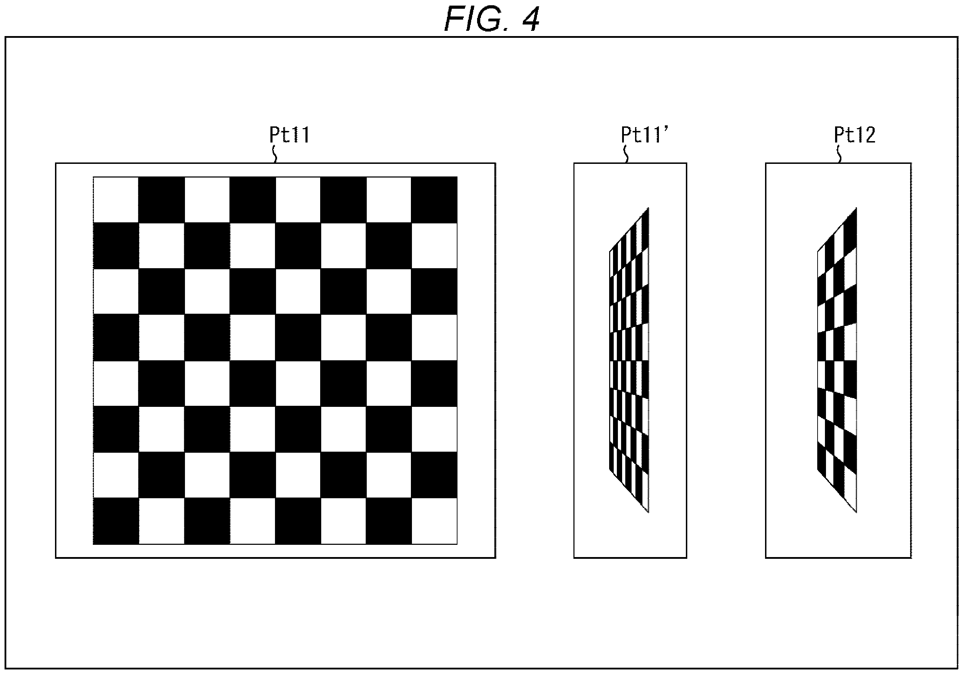

That is, as shown by an image Pt11 in the left portion of Fig. 4, in a case where the calibration pattern displayed on the display device 33 is an image of a checker flag pattern, when the image is captured in a state where the front direction of the face of the user 21 wearing the HMD 31 coincides with the front direction of the display device 33, the white or black square part of the calibration pattern of the checker flag pattern functions as a marker, and the image is captured in a state where the markers are arranged regularly. Therefore, in the left portion of Fig. 4, the calibration can be appropriately performed, and as a result, the camera parameters can be obtained appropriately.

However, when a calibration pattern displayed on the display device 33 is imaged by the camera 31a, for example, from a right oblique direction with respect to the front direction of the display device 33, an image as shown by an image Pt11' in the center of Fig. 4 is imaged, for example.

That is, as shown by the image Pt11', there is a possibility that the horizontal size of the marker in the checker flag pattern of the imaged calibration pattern is smaller than the horizontal size of the marker in the image Pt11 when imaged from the front direction, and may not be an appropriate marker size.

Therefore, in the calibration system 11 of Fig. 1, in a case where the imaging is performed with the imaging direction of the HMD 31 being from the right oblique direction with respect to the front direction of the display device 33, as shown by an image Pt12 in the right portion of Fig. 4, the horizontal size of the marker constituting the calibration pattern is increased, and the calibration pattern is displayed on the display device 33 such that the horizontal size of the marker becomes appropriate in the calibration process.

Thus, the size of the marker constituting the calibration pattern can be made an appropriate size regardless of the positional relationship between the imaging direction of the HMD 31 and the display device 33. As a result, the calibration can be appropriately performed regardless of the positional relationship between the imaging direction of the camera 31a in the HMD 31 and the display device 33, and the camera parameters can be (measured) estimated appropriately.

### <<2. First Embodiment>>

### <Configuration Example of HMD>

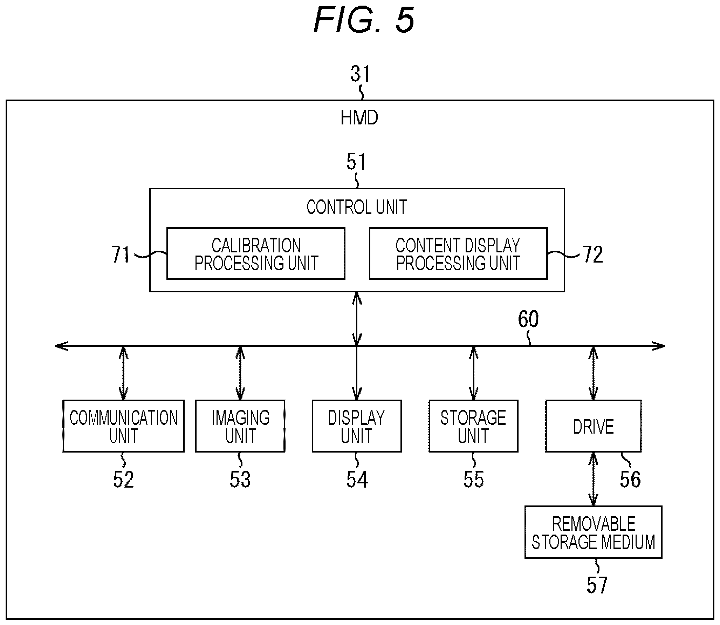

Next, a configuration example of the HMD 31 constituting the calibration system 11 of Fig. 1 will be described with reference to Fig. 5.

The head mounted display (HMD) 31 is worn so as to be wound around the head of a user 21, and a display unit 54 provided so as to cover the right and left eyes of the user 21 displays content including a VR image or an AR image supplied from the information processor 32 and causes the user 21 to view the content.

Further, the HMD 31 executes the calibration process in parallel with the process of displaying the content, captures an image of the calibration pattern displayed on the display device 33 with the provided camera 31a, and estimates (measures) the camera parameters on the basis of the captured image.

More specifically, the HMD 31 is made up of a control unit 51, a communication unit 52, an imaging unit 53, a display unit 54, a storage unit 55, a drive 56, and a removable storage medium 57, which are electrically connected to each other via a bus 60.

The control unit 51 is made up of a processor and a memory and controls the entire operation of the HMD 31.

Further, the control unit 51 includes a calibration processing unit 71 and a content display processing unit 72.

The calibration processing unit 71 executes the calibration process on the basis of marker recognition based on an image of a calibration pattern displayed on the display device 33, which is captured by the imaging unit 53, or on the basis of the information of the position and orientation estimated by simultaneous localization and mapping (SLAM), and estimates (measures) the camera parameters of the imaging unit 53, which is the camera 31a. Note that the estimation of the position and orientation may be obtained with higher accuracy by estimation using SLAM combining the measurement results of an inertial measurement unit (IMU) in addition to the image captured by the imaging unit 53. In addition, the position and orientation may be estimated by the IMU alone or may be estimated by the global positioning system (GPS), the global navigation satellite system (GNSS), or the like.

The content display processing unit 72 obtains data of content supplied from the information processor 32 via the communication unit 52 and displays a VR image or an AR image on the display unit 54.

The communication unit 52 is controlled by the control unit 51 and transmits and receives various pieces of data and programs to and from the information processor 32 via a communication network represented by a local area network (LAN) or the like using wires (or wirelessly (not shown)).

The imaging unit 53 corresponds to the camera 31a mounted in the HMD 31. Further, the imaging unit 53 is an image sensor including a complementary metal oxide semiconductor (CMOS), a charge coupled device (CCD), or the like, and the imaging unit 53 images the front of the user 21, with the user 21 wearing the imaging unit, and outputs the captured image to the control unit 51.

The display unit 54 is a display provided to cover both eyes of the user 21 of the HMD 31 and includes, for example, a liquid crystal display (LCD), an organic electro luminescence (EL), or the like. The display unit 54 is controlled by the content display processing unit 72 of the control unit 51 so as to display a VR image or an AR image on the basis of the data of the content supplied from the information processor 32.

Note that in a case where the AR image is projected and displayed, the display unit 54 may be either a transmissive display or a non-transmissive display or may be a display having a structure that covers either the right or left eye as necessary.

The storage unit 55 is controlled by the control unit 51, includes a hard disk drive (HDD), a solid state drive (SSD), a semiconductor memory, or the like, and writes or reads out various pieces of data and programs.

The drive 56 reads and writes data from and to a removable storage medium 57 such as a magnetic disk (including flexible disk), an optical disc (including compact disc-read only memory (CD-ROM) and digital versatile disc (DVD)), a magneto-optical disc (including mini disc (MD)), or a semiconductor memory.

### <Configuration example of information processor>

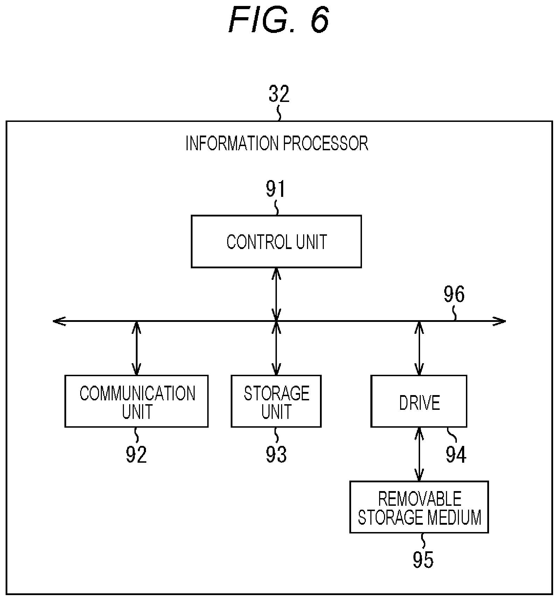

Next, a configuration example of the information processor 32 will be described with reference to Fig. 6.

The information processor 32 supplies content including a VR image, an AR image, or the like to the HMD 31 for display and also supplies parameters (hereinafter referred to simply as calibration parameters) for controlling the display size and the like of the calibration pattern supplied from the HMD 31 to the display device 33.

The information processor 32 is made up of a control unit 91, a communication unit 92, a storage unit 93, a drive 94, and a removable storage medium 95, and those units are electrically connected to each other via a bus 96.

The control unit 91 is made up of a processor and a memory and controls the entire operation of the information processor 32.

The communication unit 92 is controlled by the control unit 91 and transmits and receives various pieces of data and programs to and from the HMD 31 and the display device 33 via a communication network represented by a local area network (LAN) or the like using wires (or wirelessly (not shown)).

The storage unit 93 is controlled by the control unit 91, includes a hard disk drive (HDD), a solid state drive (SSD), a semiconductor memory, or the like, and writes or reads out various pieces of data and programs.

The drive 94 reads and writes data from and to a removable storage medium 95 such as a magnetic disk (including flexible disk), an optical disc (including compact disc-read only memory (CD-ROM) and digital versatile disc (DVD)), a magneto-optical disc (including mini disc (MD)), or a semiconductor memory.

More specifically, the control unit 91 reads out data of content including a VR image or an AR image stored in the storage unit 93 or the removable storage medium 95, for example, and controls the communication unit 92 so as to supply the data to the HMD 31 for display.

Further, the control unit 91 controls the communication unit 92 so as to obtain the information of the display image of the calibration pattern supplied from the HMD 31 and also supplies the information to the display device 33 for display.

### <Configuration example of display device>

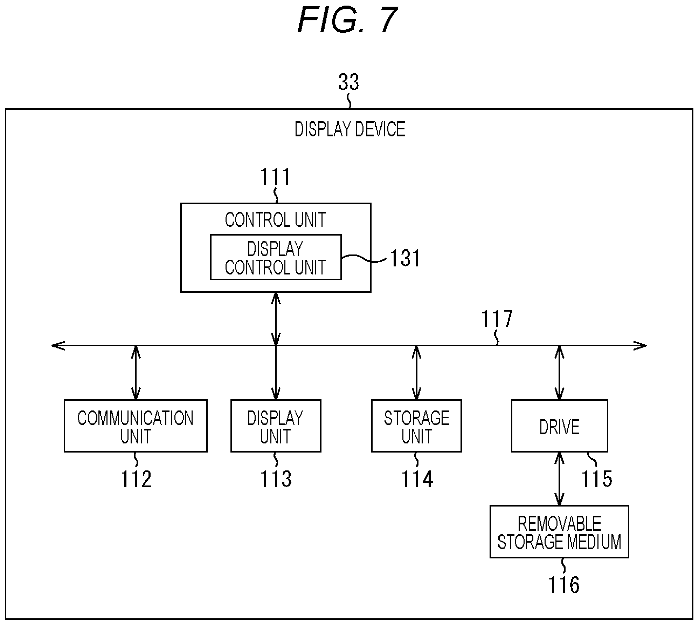

Next, the configuration example of the display device 33 will be described with reference to Fig. 7.

The display device 33 displays the calibration pattern in a display format based on the calibration parameters supplied from the HMD 31 via the information processor 32.

The display device 33 includes a control unit 111, a communication unit 112, a display unit 113, a storage unit 114, a drive 115, and a removable storage medium 116, and those units are electrically connected to each other via a bus 117.

The control unit 111 is made up of a processor and a memory and controls the entire operation of the display device 33.

Further, the control unit 111 includes a display control unit 131. The display control unit 131 performs a process on the calibration pattern on the basis of the calibration parameters supplied from the HMD 31 via the communication unit 12 and displays the calibration pattern. The calibration pattern is, for example, an image in which a plurality of square-shaped markers is arranged in an array at predetermined intervals, or an image of a checker flag pattern in which a plurality of white and black square-shaped markers is arranged in an array, but the calibration pattern may be an image in which a plurality of other markers is arranged as long as the marker has a shape with its position and size known in advance.

The communication unit 112 is controlled by the control unit 111 and transmits and receives various pieces of data and programs to and from the information processor 32 via a communication network represented by a local area network (LAN) or the like using wires (or wirelessly (not shown)).

The display unit 113 includes a liquid crystal display (LCD), an organic electro luminescence (EL), or the like, is controlled by the display control unit 131 of the control unit 111, and displays the calibration pattern in a format based on parameters related to the display of the calibration pattern supplied from the HMD 31 via the information processor 32.

The storage unit 114 is controlled by the control unit 111, includes a hard disk drive (HDD), a solid state drive (SSD), a semiconductor memory, or the like, and writes or reads out various pieces of data and programs.

The drive 115 reads and writes data from and to a removable storage medium 116 such as a magnetic disk (including flexible disk), an optical disc (including compact disc-read only memory (CD-ROM) and digital versatile disc (DVD)), a magneto-optical disc (including mini disc (MD)), or a semiconductor memory.

### <Calibration process in first embodiment>

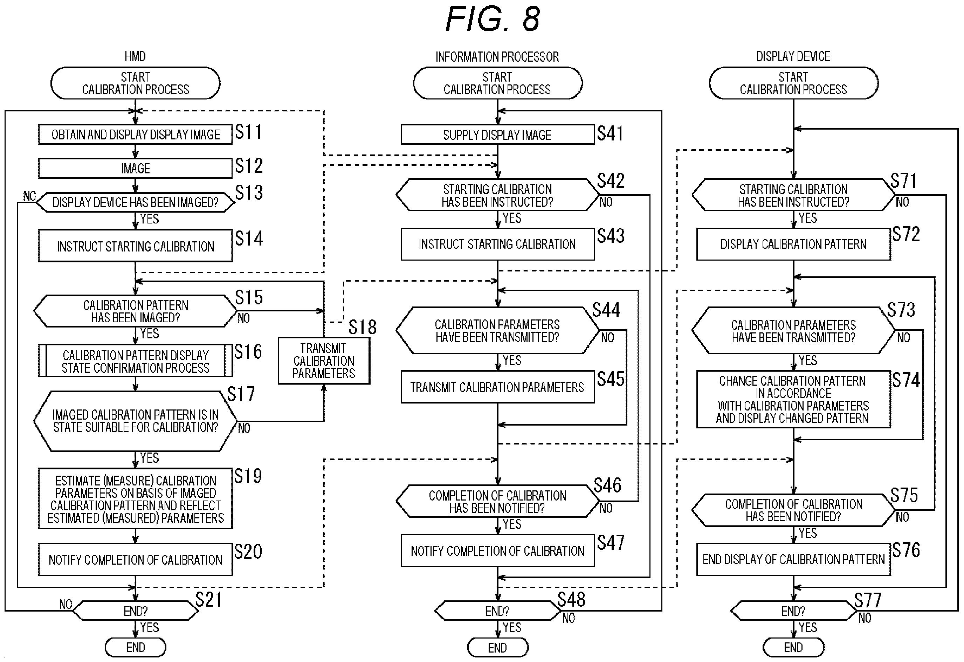

Next, a calibration process in the first embodiment will be described with reference to the flowchart of Fig. 8.

In step S41, the control unit 91 of the information processor 32 reads out the data of the display image constituting the content stored in the storage unit 93 or the removable storage medium 95 and controls the communication unit 92 so as to supply the data to the HMD 31.

In step S11, the content display processing unit 72 of the control unit 51 in the HMD 31 controls the communication unit 52 so as to obtain the data of the display image constituting the content supplied from the information processor 32 and also displays on the display unit 54 content including a VR image or an AR image on the basis of the data of the content.

By this process, the user 21 wearing the HMD 31 comes into the state of being able to view the content of the VR image or the AR image displayed on the display unit 54.

In step S12, the imaging unit 53 (camera 31a) captures an image of a scene in front of the user 21 wearing the HMD 31 and outputs the captured image to the control unit 51.

In step S13, the calibration processing unit 71 of the control unit 51 analyzes the image captured by the imaging unit 53 and determines whether or not the display device 33 is imaged. The calibration processing unit 71 determines whether or not the display device 33 has been imaged on the basis of, for example, whether or not the shape of the display device 33 is included as a result of detection of an object in the captured image.

In step S13, when, for example, the display device 33 is considered as having been imaged, the process proceeds to step S14.

In step S14, the calibration processing unit 71 controls the communication unit 52 so as to instruct the display device 33 to start calibration via the information processor 32.

In step S42, the control unit 91 of the information processor 32 controls the communication unit 92 so as to determine whether or not the start of calibration has been instructed by the HMD 31. In step S42, when the start of calibration has been instructed by the process of step S14, the process proceeds to step S43.

In step S43, the control unit 91 controls the communication unit 92 so as to instruct the display device 33 to start calibration.

In step S71, the display control unit 131 of the control unit 111 in the display device 33 controls the communication unit 112 so as to determine whether or not the instruction to start calibration from the HMD 31 has been supplied via the information processor 32. When the start of calibration has been instructed in step S71, the process proceeds to step S72.

In step S72, the display control unit 131 reads out the image data of the calibration pattern stored in the storage unit 114 or the removable storage medium 116 and causes the display unit 113 to display the image data. At this time, the display control unit 131 displays the size of the marker in the read calibration pattern in the state of a default size.

That is, when the display device 33 is imaged in the imaging unit 53 corresponding to the camera 31a of the HMD 31, calibration is started, and a calibration pattern having a default marker size is displayed on the display device 33.

On the other hand, in step S15, the calibration processing unit 71 determines whether or not the calibration pattern has been imaged by the display device 33 on the basis of the image captured by the imaging unit 53 and repeats the same process until the imaging is performed.

In step S15, when the calibration pattern is displayed on the display unit 113 of the display device 33 by the series of processes described above and the calibration pattern is thereby considered to have been imaged by the imaging unit (camera 31a), the process proceeds to step S16.

In step S16, the calibration processing unit 71 executes a calibration pattern display state confirmation process and confirms the display state of the calibration pattern imaged by the imaging unit 53. More specifically, the calibration processing unit 71 determines whether or not the calibration pattern is in a state suitable for calibration, and in the case of the state not being suitable, sets a size or the like for displaying the calibration pattern suitable for calibration on the display device 33 as described with reference to Figs. 3 and 4, and calculates a corresponding calibration parameter.

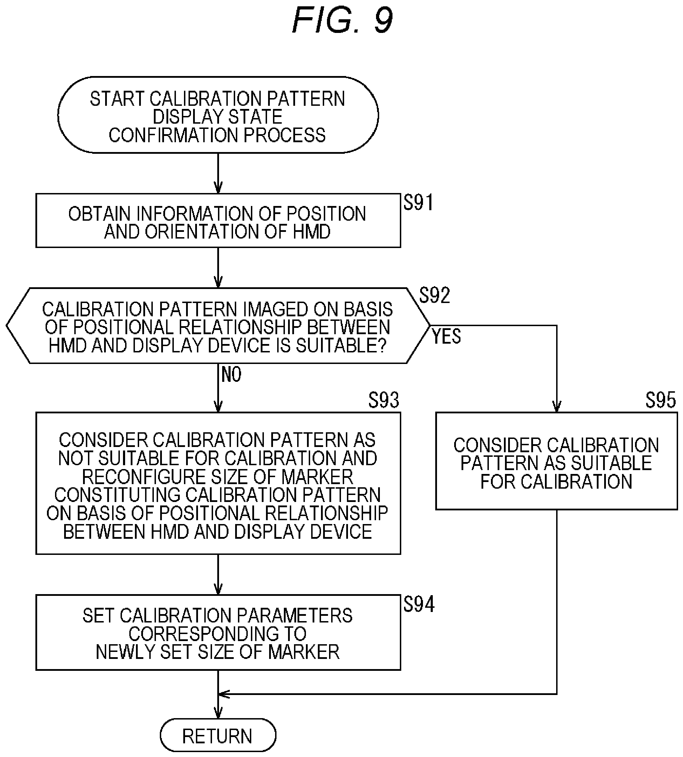

Note that the calibration pattern display state confirmation process will be described in detail later with reference to a flowchart of Fig. 9.

In step S17, the calibration processing unit 71 determines whether or not the imaged calibration pattern has been determined to be in the state suitable for calibration by the calibration pattern display state confirmation process. In step S17, when the imaged calibration pattern is not suitable for calibration, the process proceeds to step S18.

In step S18, the calibration processing unit 71 controls the communication unit 52 so as to transmit the calibration parameters calculated by the calibration pattern display state confirmation process to the display device 33 via the information processor 32, and the process returns to step S15.

In step S44, the control unit 91 of the information processor 32 controls the communication unit 92 so as to determine whether or not the calibration parameters have been supplied from the HMD 31 to the display device 33. Then, when the calibration parameters have been supplied to the display device 33 in step S44, the process proceeds to step S45.

In step S45, the control unit 91 controls the communication unit 92 so as to transmit the calibration parameters to the display device 33.

In step S73, the display control unit 131 of the control unit 111 in the display device 33 controls the communication unit 112 so as to determine whether or not the calibration parameters transmitted from the HMD 31 via the information processor 32 have been supplied. Then, when the calibration parameters have been supplied in step S73, the process proceeds to step S74.

In step S74, the display control unit 131 controls the communication unit 92 so as to obtain the calibration parameters, performs a process according to the calibration parameters on the calibration pattern stored by default, and displays the calibration pattern on the display unit 113.

That is, as described with reference to Fig. 3, in a case where the HMD 31 is farther than a predetermined distance from the display device 33, the marker is displayed with a large size on the basis of the calibration parameter. Further, in a case where the HMD 31 is at the predetermined distance from the display device 33, the size of the marker in the calibration pattern is set to the default size. Moreover, in a case where the HMD 31 is closer than the predetermined distance to the display device 33, the marker in the calibration pattern is displayed with the size smaller than the default size.

Further, as described with reference to Fig. 4, in a case where the HMD 31 is present in the crosswise direction with respect to the display surface of the display unit 113 of the display device 33, the horizontal size of the marker in the calibration pattern is increased. Moreover, in a case where the HMD 31 is present in front of the display surface of the display unit 113 of the display device 33, the horizontal size of the marker in the calibration pattern is displayed with the default size.

By adjusting the size of the marker displayed in this way, the size of the marker in the calibration pattern imaged by the imaging unit 53 can always be made an appropriate size, and as a result, the calibration pattern can always be displayed in the state suitable for calibration.

When the calibration parameters have not been transmitted in steps S44 and S73, the processes in steps S45 and S74 are skipped.

Further, in step S46, the control unit 91 determines whether or not the completion of calibration has been notified from the HMD 31, and when not notified, the process returns to step S44. That is, the processes of steps S44 to S46 are repeated until the calibration is completed.

Moreover, in step S75, the display control unit 131 determines whether or not the completion of calibration has been notified from the HMD 31 via the information processor 32, and when not notified, the process returns to step S73. That is, the processes of steps S73 to S75 are repeated until the calibration is completed.

Further, in the HMD 31, the processes of steps S15 to S18 are repeated unless the imaged calibration pattern is considered as suitable for calibration in step S17. Thus, the processes of steps S44 to S46 are repeated in the information processor 32, the processes of steps S73 to S75 are repeated in the display device 33, the calibration parameters are repeatedly set, and the display size of the marker of the calibration pattern continues to change in accordance with the positional relationship between the HMD 31 and the display device.

When it is considered in step S17 that the calibration pattern imaged by the imaging unit 53 is suitable for calibration, the process proceeds to step S19.

In step S19, the calibration processing unit 71 estimates (measures) the camera parameters of the camera 31a, which is the imaging unit 53, on the basis of the imaged calibration pattern and reflects the obtained camera parameters on the image captured by the imaging unit 53.

The camera parameters to be obtained here are, for example, the information of the position and orientation of the setup of the camera 31a (imaging unit 53) starting from the display unit 113 of the display device 33, information of internal parameters (distortion, focal length, optical center, etc.) of the camera 31a (imaging unit 53), the information of the position and orientation between the cameras 31a (imaging units 53) in a case where there is a plurality of cameras 31a (imaging units 53) is present, color information including the white balance of the camera 31a (imaging unit 53), and the like. However, in a case where the camera parameters of the color information including the white balance are estimated (measured), the calibration pattern needs to include an image containing each color of RGB, for example.

In step S20, the calibration processing unit 71 controls the communication unit 52 so as to notify the display device 33 of the completion of calibration via the information processor 32.

It is thus considered that the completion of calibration is notified in step S46, and the process proceeds to step S47.

In step S47, the control unit 91 controls the communication unit 92 so as to notify the display device 33 of the completion of calibration.

Moreover, in step S75, it is considered that the completion of calibration has been notified, and the process proceeds to step S76.

In step S76, the display control unit 131 controls the communication unit 112 so as to obtain the notification of completion of calibration and ends the display of the calibration pattern on the display unit 113.

In step S21, the calibration processing unit 71 determines whether or not the end of the process has been instructed, and when the end has not been instructed, the process returns to step S11, and the subsequent processes are repeated. Note that when it is considered in step S13 that the display device 33 has not been imaged, the process proceeds to step S21.

Further, in step S48, the control unit 91 determines whether or not the end of the process has been instructed, and when the end has not been instructed, the process returns to step S41, and the subsequent processes are repeated. Note that when it is considered in step S42 that the start of calibration has not been instructed, the process proceeds to step S48.

Moreover, in step S77, the display control unit 131 determines whether or not the end of the process has been instructed, and when the end has not been instructed, the process returns to step S71, and the subsequent processes are repeated. Note that when it is considered in step S71 that the start of calibration has not been instructed, the process proceeds to step S77.

Then, when the end is instructed in each of steps S21, S48 and S77, the calibration process ends.

By the above process, it is in a state where the content including the VR image or the AR image is displayed on the display unit 54 of the HMD 31, and the user 21 is viewing the content, but independently of this state, the calibration process of the camera parameters of the camera 31a (imaging unit 53) is achieved.

As a result, it is possible to estimate (measure) the camera parameters of the camera 31a (imaging unit 53) without the user 21 being aware. Also, at this time, the display size of the calibration pattern displayed on the display device 33 and imaged by the imaging unit 53 is displayed in a state adjusted to a size suitable for calibration in accordance with the positional relationship between the HMD 31 (camera 31a) and the display device 33, so that appropriate estimation (measurement) of the camera parameters can be achieved.

### <Calibration pattern display state confirmation process>

Next, the calibration pattern display state confirmation process will be described with reference to the flowchart of Fig. 9.

In step S91, the calibration processing unit 71 obtains (estimates) the information of the position and orientation of the HMD 31 itself by SLAM based on the image captured by the imaging unit 53.

In step S92, the calibration processing unit 71 determines whether or not the calibration pattern displayed with the current calibration parameters is suitable for calibration on the basis of the information of the positions and orientations of the HMD 31 and the display device 33.

It is assumed here that the information of the position, orientation, size, and resolution of the display device 33 is obtained in advance and stored in the storage unit 55, but for example, the information may be obtained via the information processor 32 on the basis of the model number of the display device 33, or the like, or may be input by the user 21. Further, since the calibration processing unit 71 has obtained the information of the position and orientation of the HMD 31, the position and orientation (the direction of the display surface of the display unit 113) of the display device 33 may be detected in the image having been captured by the imaging unit 53, which is the camera 31a.

Thus, the calibration processing unit 71 can recognize the positional relationship between the HMD 31 and the display device 33.

Further, in a case where the calibration parameters are not supplied from the HMD 31, the calibration pattern is displayed at a default position and size, so that the calibration processing unit 71 can estimate the size of the marker of the calibration pattern in the captured image.

Moreover, even when the calibration parameters are supplied to the display device 33 in the subsequent processes, the supplied calibration parameters are known, and hence, at this time as well, the calibration processing unit 71 can estimate the position and size of the marker of the calibration pattern in the image captured by the camera 31a.

From this information, the calibration processing unit 71 can determine whether or not the size of the marker in the image displayed with the current calibration parameters and captured by the imaging unit 53 in the calibration pattern is suitable for calibration.

When it is determined in step S92 that the size of the marker of the calibration pattern displayed on the display device 33 is not suitable for calibration, the process proceeds to step S93.

In step S93, the calibration processing unit 71 considers that the size of the marker of the calibration pattern currently displayed on the display device 33 is not suitable for calibration and sets an appropriate marker size on the basis of the positional relationship between the current HMD 31 and the display device 33.

That is, for example, as described with reference to Fig. 3, the calibration processing unit 71 sets the size of the marker of the calibration pattern to be larger than the default size when the marker is more apart than the predetermined distance.

Further, as described with reference to Fig. 4, for example, in a case where the HMD 31 is present at a position at a predetermined angle with respect to the front direction of the display surface of the display unit 113 of the display device 33 and the size of the marker is smaller than the horizontal size of the marker of the imaged calibration pattern, the calibration processing unit 71 sets the size in the horizontal direction, which is the direction forming the predetermined angle, to be larger.

Similarly, in a case where the HMD 31 is present at a position at a predetermined angle with respect to the vertical direction to the front direction of the display surface of the display unit 113 of the display device 33 and the size of the marker is smaller than the vertical size of the marker of the imaged calibration pattern, the calibration processing unit 71 may set the size in the vertical direction, which is the direction forming the predetermined angle, to be larger.

Note that it is assumed here that the resolution, size, and the like of the display unit 113 in the display device 33 are known at the time when the calibration processing unit 71 sets the size of the marker, but the information of the resolution, size, and the like of the display unit 113 may, for example, be input to the HMD 31 by a user in advance using a keyboard, an operation button, or the like (not shown). In addition, each resolution and size may be stored in advance in association with the model number of the display device 33, and the model number and the like of the display device 33 may be obtained in advance via the information processor 32 to be known. Moreover, regarding the size of the display unit 113 of the display device 33, since the positional relationship between the HMD 31 and the display device 33 is known, the calibration processing unit 71 may obtain the size on the basis of the dimensions and shape of the display device 33 in the image captured by the imaging unit 53, which is the camera 31a.

In step S94, the calibration processing unit 71 calculates calibration parameters corresponding to the set size of the marker of the calibration pattern.

That is, when the size of the marker of the calibration pattern is considered as not suitable for calibration, the calibration processing unit 71 sets an appropriate size of the marker on the basis of the positional relationship between the HMD 31 and the display device 33 and calculates calibration parameters corresponding to the set size.

On the other hand, when it is considered in step S92 that the size of the marker of the imaged calibration pattern is suitable for calibration, the process proceeds to step S95.

In step S95, the calibration processing unit 71 considers that the size of the marker of the imaged calibration pattern is suitable for calibration and maintains the current size of the marker of the calibration pattern.

By the above process, even when the user 21 wearing the HMD 31 moves to various positions with respect to the display device 33 while viewing the content, the display device 33 performs the display while dynamically changing the size of the marker of the calibration pattern in accordance with the positional relationship with the HMD 31, so that it is possible to appropriately estimate (measure) the camera parameters without the user 21 being aware of calibration.

Note that the example has been described above where the calibration pattern is displayed and calibration is started when the display device 33 is imaged by the camera 31a (imaging unit 53) of the HMD 31, but at a timing except for that, the calibration may be started.

For example, the calibration may be started such that the calibration pattern is periodically repeatedly displayed on the display device 33 each time a predetermined time elapses.

Further, the calibration may be started at a timing when calibration is required, such as a timing at which a discrepancy occurs between an image to be originally captured by the camera 31a (imaging unit 53) and an image actually captured by the camera 31a (imaging unit 53) from the information of the position and orientation estimated by SLAM based on an image captured by the imaging unit 53 due to deviation in the setup direction of the camera 31a (imaging unit 53) or the like for some reason, for example.

Moreover, when the user 21 views the VR image or the AR image to be viewed and feels discomfort in a change in the image with respect to a change in the position or orientation, the calibration may be started at a timing, for example, when the user 21 mutters a word indicating abnormality such as "something wrong" or "deviated," for example.

Further, in Fig. 1, the display device 33 is configured assuming a display, such as a television receiver in a home environment, but may be a large display provided outdoors, and for example, and a calibration pattern may be displayed on a large display or the like provided in a large building or the like provided in a town for advertisement, and the calibration process may be performed.

Moreover, in the above description, the example has been described where the calibration is performed using one display device 33 with respect to the camera 31a of one HMD 31 to estimate (measure) the camera parameters, but even in a state where a plurality of cameras 31a is provided in the HMD 31 or cameras 31a are provided in a plurality of HMD 31, the camera parameters of each camera 31a may be estimated (measured) by one display device 33.

Further, the calibration processing unit 71 may set calibration parameters for controlling a frame rate of the camera 31a in the display unit 113 of the display device 33 displaying the calibration pattern on the basis of the frame rate and may control the display device 33 so as to display the calibration pattern at a frame rate at which the camera 31a can easily image the calibration pattern.

Moreover, in a case where camera parameters including color information that includes white balance, calibration parameters for controlling the color arrangement of the markers constituting the calibration pattern and the white balance may be set, and the color arrangement and the white balance of the calibration pattern suitable for calibration may be controlled.

### <<3. First Modification>>

In the above, the example has been described where the size of the marker constituting the calibration pattern is set to an appropriate size and the display size is changed on the basis of the positional relationship between the HMD 31 and the display device 33, whereby the calibration pattern can be appropriately imaged in the camera 31a (imaging unit 53), and the camera parameters by calibration are estimated (measured) accurately.

However, the brightness for displaying the calibration pattern in the display device 33 may be controlled when the presence or absence of clipped whites or clipped blacks of the calibration pattern imaged by the camera 31a are detected and the clipped whites or the clipped blacks are detected.

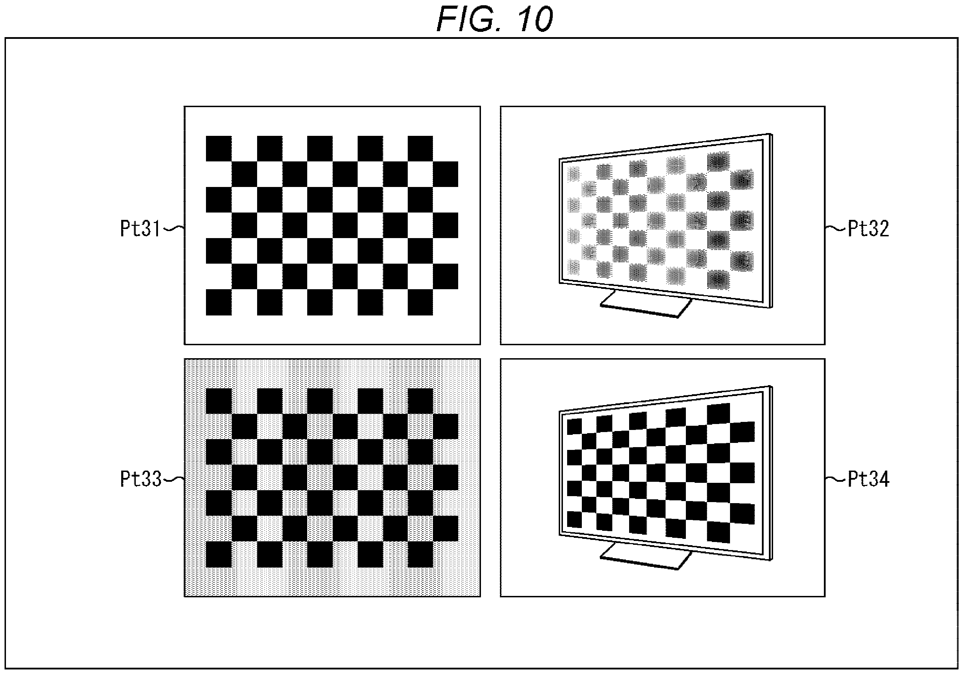

That is, in a case where the calibration pattern is a checker flag pattern as shown by an image Pt31 in the upper left portion of Fig. 10 and is displayed on the display unit 113 of the display device 33 at normal brightness, a state is conceived where the calibration pattern is imaged by the camera 31a (imaging unit 53) such that clipped whites occur, for example, as shown by an image Pt32 in the upper right portion of Fig. 10.

In the calibration pattern imaged as shown in the image Pt32, there is a possibility that the boundaries of the markers constituting the calibration pattern, particularly adjacent markers, may not be appropriately recognized due to clipped whites, and there is a possibility that camera parameters may not be estimated (measured) appropriately.

With the clipped whites being a phenomenon caused by the excessively high brightness displayed by the display device 33, the brightness of the calibration pattern in the display unit 113 of the display device 33 is reduced, as shown by an image Pt33 in the lower left portion of Fig. 10. This reduces the clipped whites of the calibration pattern imaged by the camera 31a (imaging unit 53), as shown by an image Pt34 in the lower right portion of Fig. 10. As a result, the calibration pattern is imaged in an appropriate state, so that the camera parameters can be estimated (measured) appropriately.

Note that in Fig. 10, the example of the case where clipped whites have occurred has been described, but in a case where there are clipped blacks, the brightness is increased for display. That is, with the clipped blacks being a phenomenon caused by the excessively low brightness by the display unit 113 of the display device 33, the brightness is increased to brighten the entire image and reduce the occurrence of the clipped blacks.

In addition, clipped whites or clipped blacks may be reduced not only by the brightness adjustment of the display device 33 but also by the control of the exposure of the camera 31a, so that the calibration pattern may be imaged in an appropriate state to appropriately estimate (measure) the camera parameters.

### <Calibration pattern display state confirmation process in first modification>

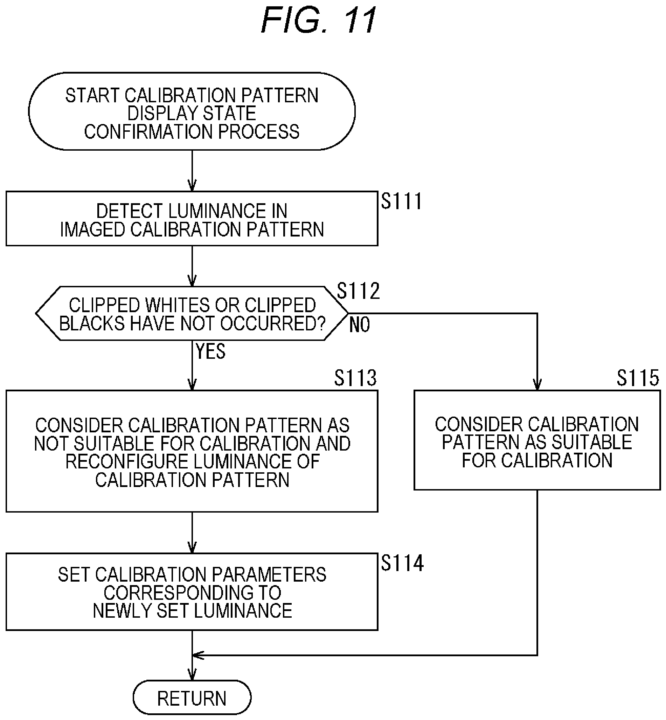

Next, a calibration pattern display state confirmation process in the first modification will be described with reference to a flowchart of Fig. 11. Note that a calibration process in the first modification is similar to the process described with reference to the flowchart of Fig. 8, and hence the description thereof will be omitted.

In step S111, the calibration processing unit 71 detects the brightness of each pixel in the image of the calibration pattern imaged by the camera 31a (imaging unit 53).

In step S112, the calibration processing unit 71 determines whether or not clipped whites or clipped blacks have occurred on the basis of the information of the detected brightness of each pixel. More specifically, on the basis of the information of the detected brightness value of each pixel, the calibration processing unit 71 determines the presence or absence of clipped whites from, for example, whether or not the number of pixels with saturated pixel values is a predetermined ratio or more. Further, similarly, the calibration processing unit 71 determines the presence or absence of clipped blacks from, for example, whether or not the number of pixels with pixel values being the minimum brightness value is a predetermined ratio or more.

When it is considered in step S112 that clipped whites or clipped blacks have occurred, the process proceeds to step S113.

In step S113, the calibration processing unit 71 considers that the imaged calibration pattern is not suitable for calibration due to the clipped whites or clipped blacks and adjusts the brightness for displaying the calibration pattern so as to reduce the clipped whites or clipped blacks.

That is, in a case where the brightness of the calibration pattern is high and clipped whites are detected, the calibration processing unit 71 sets a brightness value to reduce the brightness. Further, in a case where the brightness of the calibration pattern is low and clipped blacks are detected, the calibration processing unit 71 sets a brightness value so as to increase the brightness.

In step S114, the calibration processing unit 71 sets calibration parameters corresponding to the adjusted brightness.

On the other hand, when it is considered in step S112 that there are no clipped whites or clipped blacks, the process proceeds to step S115.

In step S115, the calibration processing unit 71 considers that the imaged calibration pattern is suitable for calibration and maintains the current brightness value.

By the above process, in the process of step S74 in the flowchart of Fig. 8, in accordance with the brightness state of the imaged calibration pattern, the calibration pattern is displayed with a brightness appropriate for calibration, using calibration parameters for adjusted brightness displayed on the display unit 113 of the display device 33.

As a result, the camera parameters of the camera 31a (imaging unit 53) can be appropriately estimated (measured) by the calibration. Note that the calibration pattern display state confirmation process in the first modification described with reference to Fig. 11 and the calibration pattern display state confirmation process described with reference to Fig. 9 may be performed in combination. By such a process, the brightness can be adjusted while the size of the marker of the calibration pattern can be adjusted in accordance with the positional relationship between the HMD 31 and the display device 33, thus making it possible to estimate (measure) the camera parameters with higher accuracy.

### <<4. Second Modification>>

In the above, the example has been described where the HMD 31 adjusts the size and brightness of the calibration pattern displayed on the display unit 113 of the display device 33 in accordance with the positional relationship with the display device 33 and the brightness, to appropriately estimate (measure) the camera parameters of the camera 31a (imaging unit 53)

However, when the camera parameters of the camera 31a (imaging unit 53) can be estimated (measured), an image except for the calibration pattern may be displayed on the display device 33 and imaged by the camera 31a (imaging unit 53) for use in calibration. For example, a content image usable for calibration may be set in advance, displayed on the display device 33 at a predetermined timing, and used for calibration at the displayed timing.

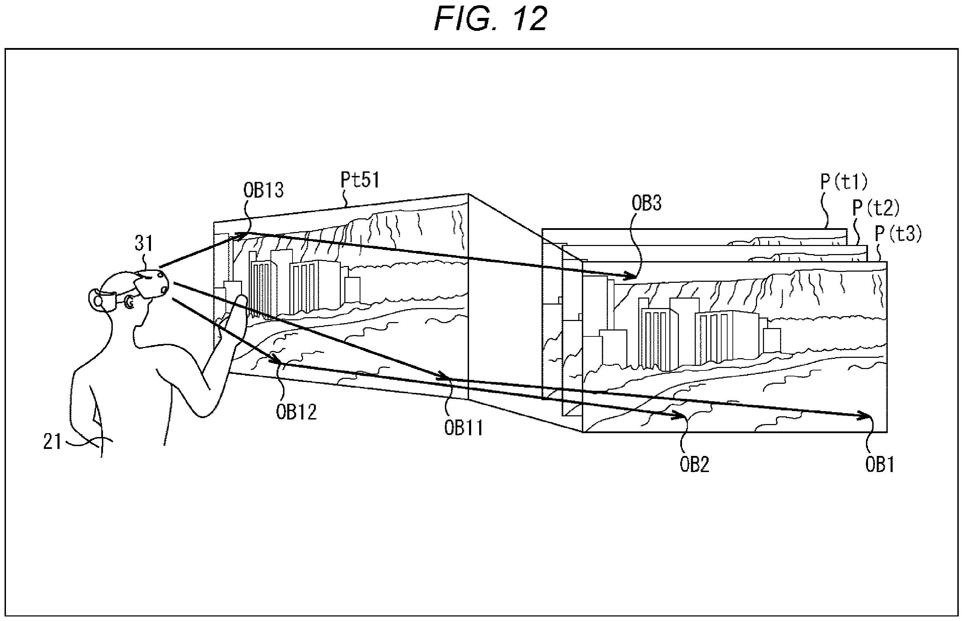

That is, as shown in the right portion of Fig. 12, it is assumed that content including a moving image in which content images P(t1) to P(t3) are sequentially displayed in time series at timings of times t1 to t3 is displayed on the display unit 113 of the display device 33. In this case, a content image P(t3) displayed beforehand at the timing of time t3 is set as calibration content to be used for calibration, and the position of a predetermined object in the content is used for calibration.

In this case, the calibration processing unit 71 previously stores calibration content Pt 51 corresponding to the content image P(t3) as shown in the left portion of Fig. 12.

Then, at time t3, the calibration processing unit 71 performs calibration by comparison between predetermined positions OB1 to OB3 of the object in the content image P(t3) in the image captured by the camera 31a (imaging unit 53) and predetermined positions OB11 to OB13 of the object in the calibration content Pt 51 stored correspondingly in advance and estimates (measures) the camera parameters.

### <Calibration process of second modification>

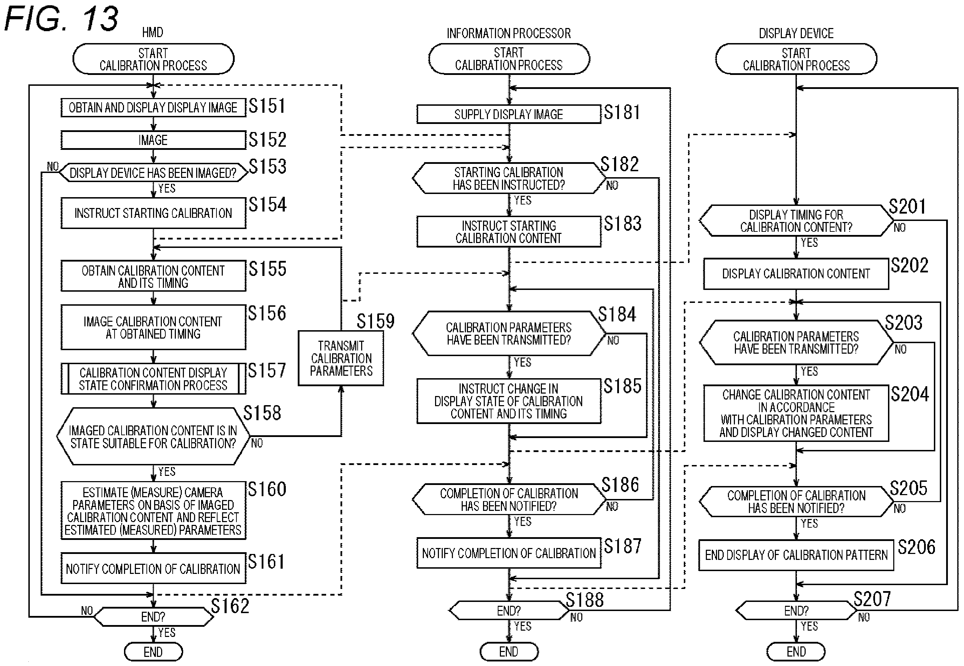

Next, a calibration process in the second modification will be described with reference to a flowchart of Fig. 13. Note that in this process, it is assumed that calibration content and information of a timing at which the calibration content is reproduced are stored in advance in the storage unit 55 of the HMD 31 and that the calibration processing unit 71 reads out and uses the calibration content as appropriate.

In step S181, the control unit 91 of the information processor 32 reads out the data of the content stored in the storage unit 93 or the removable storage medium 95 and controls the communication unit 92 so as to supply the data to the HMD 31.

In step S151, the content display processing unit 72 of the control unit 51 in the HMD 31 controls the communication unit 52 so as to obtain the data of the content supplied from the information processor 32 and also displays the content of the VR image or the AR image on the display unit 54 on the basis of the data of the content.

By this process, the user 21 wearing the HMD 31 views the content of the VR image or the AR image displayed on the display unit 54.

In step S152, the imaging unit 53 (camera 31a) images the scene in front of the user 21 wearing the HMD 31 and outputs the captured image to the control unit 51.

In step S153, the calibration processing unit 71 of the control unit 51 analyzes the image captured by the imaging unit 53 and determines whether or not the display device 33 has been imaged. The calibration processing unit 71 determines whether or not the display device 33 has been imaged on the basis of, for example, whether or not the shape of the display device 33 is included as a result of detection of an object in the captured image.

In step S153, when, for example, the display device 33 is considered as having been imaged, the process proceeds to step S154.

In step S154, the calibration processing unit 71 controls the communication unit 52 so as to instruct the display device 33 to start calibration via the information processor 32.

In step S182, the control unit 91 of the information processor 32 controls the communication unit 92 so as to determine whether or not the start of calibration has been instructed by the HMD 31. In step S182, for example, when the start of calibration has been instructed by the process of step S154, the process proceeds to step S183.

In step S183, the control unit 91 controls the communication unit 92 so as to instruct the display device 33 to start calibration. At this time, the control unit 91 supplies the calibration content and the information of the display timing of the calibration content as necessary. Note that in a case where the calibration content is stored in advance in the display device 33, only the information of the display timing of the calibration content is supplied.

In step S201, the display control unit 131 of the control unit 111 in the display device 33 controls the communication unit 112 so as to determine whether or not the instruction to start calibration from the HMD 31 has been supplied via the information processor 32. When the start of calibration has been instructed in step S201, the process proceeds to step S202.

In step S202, the display control unit 131 reads out the image data of the calibration content stored in the storage unit 114 or the removable storage medium 116 and causes the display unit 113 to display the image data. Alternatively, the display control unit 131 causes the display unit 113 to display the calibration content supplied from the HMD 31 via the information processor 32. At this time, the display control unit 131 displays the calibration content as a part of the time-series moving image in accordance with the supplied display timing.

On the other hand, in step S155, the calibration processing unit 71 reads out an image for calibration, which is a part of the calibration content stored in the storage unit 55 or the removable storage medium 57, and also reads out the timing at which the image is to be displayed.

In step S156, the calibration processing unit 71 controls the camera 31a (imaging unit 53) so as to capture an image of the calibration content displayed on the display device 33 at a timing when the image for calibration is captured.

In step S157, the calibration processing unit 71 executes a calibration content display state confirmation process and confirms the display state of the image of the calibration content captured by the imaging unit 53 by comparison between the image of the calibration content captured by the imaging unit 53 and the read image for calibration.

Here, in a case where the image for calibration is not suitable for calibration, the calibration processing unit 71 sets the size, brightness, and the like for displaying the image for the calibration content suitable for calibration on the display device 33 and calculates corresponding calibration parameters, as described with reference to Figs. 3 and 4.

Note that the calibration content display state confirmation process is basically similar to the calibration pattern display state confirmation process described with reference to the flowchart of Fig. 9, and hence the description thereof will be omitted.

In step S158, the calibration processing unit 71 determines whether or not the captured image for calibration has been determined to be in the state suitable for calibration by the calibration content display state confirmation process. In step S158, when the captured image for calibration is not suitable for calibration, the process proceeds to step S159

In step S159, the calibration processing unit 71 controls the communication unit 52 so as to transmit the calibration parameters for the calibration content and the information of the display timing of the image for calibration to the display device 33 via the information processor 32, and the process returns to step S155.

In step S184, the control unit 91 of the information processor 32 controls the communication unit 92 so as to determine whether or not the calibration parameters in the calibration content and the information of the display timing have been supplied from the HMD 31 for the display device 33. Then, when the calibration parameters and the information of the display timing have been supplied to the display device 33 in step S184, the process proceeds to step S185.

In step S185, the control unit 91 controls the communication unit 92 so as to transmit the calibration parameters and the information of the display timing of the image for calibration to the display device 33.

In step S203, the display control unit 131 of the control unit 111 in the display device 33 controls the communication unit 112 so as to determine whether or not the calibration parameters and the information of the display timing transmitted from the HMD 31 via the information processor 32 have been supplied. Then, when the calibration parameters and the information of the display timing have been supplied in step S203, the process proceeds to step S204.

In step S204, the display control unit 131 controls the communication unit 92 so as to obtain calibration parameters, performs a process according to the calibration parameters on the image for calibration of the calibration content stored by default for update, and also displays the image for calibration on the information display unit 113 at a predetermined display timing supplied from the HMD 31.

Thus, by appropriately updating the size and brightness of the image for calibration in the calibration content imaged by the imaging unit 53, the image is displayed in the state suitable for calibration.

In a case where the calibration parameters and the information of the display timing have not been transmitted in steps S184 and S203, the processes in steps S185 and S204 are skipped.

Further, in step S186, the control unit 91 determines whether or not the completion of calibration has been notified from the HMD 31, and when not notified, the process returns to step S184. That is, the processes of steps S184 to S186 are repeated until the completion of calibration is notified.

Moreover, in step S205, the display control unit 131 determines whether or not the completion of calibration has been notified from the HMD 31 via the information processor 32, and when not notified, the process returns to step S203. That is, the processes of steps S203 to S205 are repeated until the completion of calibration is notified.

Further, in the HMD 31, the processes of steps S155 to S159 are repeated unless the image for calibration in the captured calibration content is considered as suitable for calibration in step S158. Thus, the processes of steps S184 to S186 are repeated in the information processor 32, the processes of steps S203 to S205 are repeated in the display device 33, and the adjustment of the size, brightness, and the like of the image for calibration with the calibration parameters continues to be repeated.

Then, when it is considered in step S158 that the image for calibration in the captured calibration content is suitable for calibration, the process proceeds to step S160.

In step S160, the calibration processing unit 71 estimates (measures) the camera parameters of the camera 31a, which is the imaging unit 53, on the basis of the captured image for calibration and reflects the obtained camera parameters on the image captured by the imaging unit 53.

In step S161, the calibration processing unit 71 controls the communication unit 52 so as to notify the display device 33 of the completion of calibration via the information processor 32.

Further, in step S186, it is considered that the completion of calibration has been notified, and the process proceeds to step S187.

In step S187, the control unit 91 controls the communication unit 92 so as to notify the display device 33 of the completion of calibration.

Moreover, in step S205, it is considered that the completion of calibration has been notified, and the process proceeds to step S206.

In step S206, the display control unit 131 controls the communication unit 112 so as to obtain the notification of completion of calibration and ends the display of the calibration content on the display unit 113.

In step S162, the calibration processing unit 71 determines whether or not the end of the process has been instructed, and when the end has not been instructed, the process returns to step S151, and the subsequent processes are repeated. Note that when it is considered in step S153 that the display device 33 has not been imaged, the process proceeds to step S162.

Further, in step S188, the control unit 91 determines whether or not the end of the process has been instructed, and when the end has not been instructed, the process returns to step S181, and the subsequent processes are repeated. Note that when it is considered in step S182 that the start of calibration has not been instructed, the process proceeds to step S188.

Moreover, in step S207, the display control unit 131 determines whether or not the end of the process has been instructed, and when the end has not been instructed, the process returns to step S201, and the subsequent processes are repeated. Note that when it is considered in step S201 that the start of calibration has not been instructed, the process proceeds to step S207.

Then, when the end is instructed in each of steps S162, S188, and S207, the calibration process ends.

By the above process, it is in a state where the content including the VR image or the AR image is displayed on the display unit 54 of the HMD 31, and the user 21 is viewing the content, but independently of this state, the calibration process of the camera parameters of the camera 31a (imaging unit 53) is achieved.

Further, the image used for calibration is only the image displayed at a predetermined timing among the images that are displayed on the display device 33 as the calibration content including a moving image, so that a user not wearing the HMD 31 can view the calibration content displayed on the display device 33 without uncomfortable feeling.

As a result, it is possible to estimate (measure) the camera parameters of the camera 31a (imaging unit 53) without the awareness of not only the user 21 wearing the HMD 31 but also other users. Also, at this time, the display size and brightness of the image for calibration displayed on the display device 33 and imaged by the imaging unit 53 are displayed in a state adjusted to the size and brightness suitable for calibration, whereby appropriate estimation (measurement) of the camera parameters can be achieved.

Further, since calibration content not recognizable as an image for calibration at a glance are continuously displayed on the display device 33 in this manner, the user not wearing the HMD 31 can view the calibration content as general content displayed on the display device 33. Therefore, the display device 33 may include, for example, a large-sized display for advertisement provided in a town, and a general user not wearing the HMD 31 may be caused to view calibration content that is displayed for advertisement at first glance, while the camera 31a of the HMD 31 worn by a user in the vicinity is caused to perform calibration to estimate (measure) camera parameters.

In this case as well, it is possible to appropriately perform the calibration and estimate (measure) the camera parameters of the camera 31a without making the user wearing the HMD 31 or the user not wearing the HMD 31 aware of calibration.

### <<5. Third Modification>>

In the above, the example has been described where the size and brightness of the calibration pattern imaged by the camera 31a (imaging unit 53) of the HMD 31, a marker displayed as calibration content, and the like are changed to adjust an image suitable for calibration, and the camera parameters are estimated (measured) from one image.

However, an image for guiding the user 21 to change the position and orientation of the user 21 may be displayed in the content viewed by the user 21 with the HMD 31a, a plurality of images suitable for calibration may be captured, and the camera parameters may be estimated (measured) from the plurality of images.

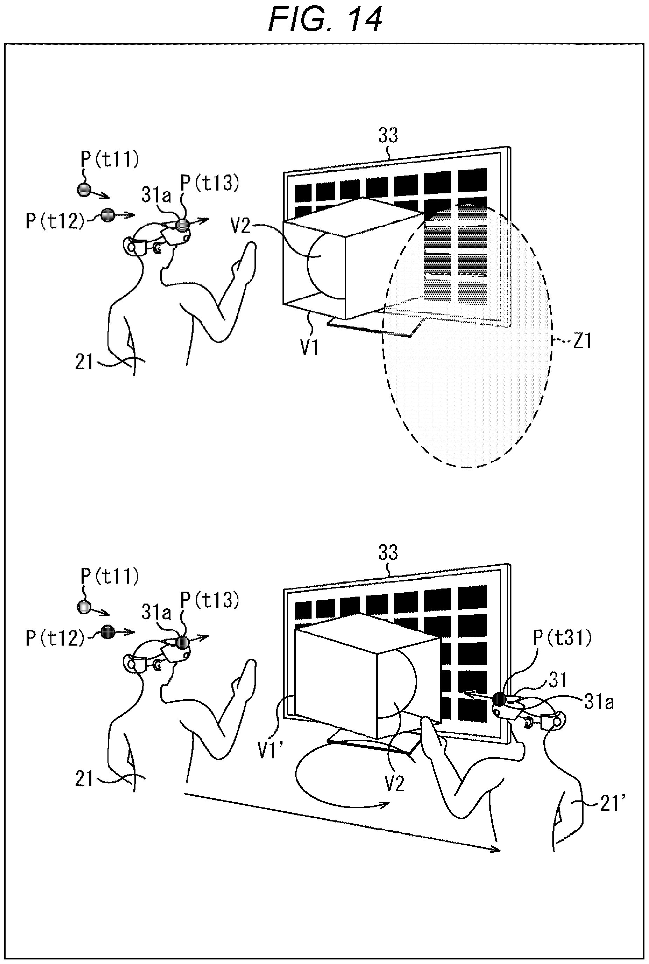

That is, for example, as shown in the upper portion of Fig. 14, a state will be conceived where the position of observation by the camera 31a (imaging unit 53) worn by the user 21 changes from a position facing the display surface of the display unit 113 of the display device 33 to a position P(t11) to P(t13) from left to right in the figure in time series as shown by times t11 to t13 with respect to the display device 33.

In the case of the upper portion of Fig. 14, the position of observation by the camera 31a is in the left-side range in an imbalanced manner when the user 21 faces the display device 33, and no observation position is present in a right-side range Z1 when the user 21 faces the display device 33, so that at the time of estimating (measuring) the camera parameters, there is a possibility that the imbalance may occur and the accuracy of the estimated camera parameters may be lowered.

Therefore, in a VR image or an AR image displayed on the display unit 54 in the HMD 31, for example, as shown in the upper portion of Fig. 14, a cylindrical object V1 having a square-shaped opening is displayed as a three-dimensional structure at a position immediately in front of the display device 33, and the user 21 is given a game task in which points are added by looking into an object V2 provided inside the object V1 through the opening.

Note that in the upper portion of Fig. 14, the opening of the cylindrical object V1 having the square-shaped opening is provided in the front direction of the display surface of the display unit 113 of the display device 33, and the object V2 provided therein can be viewed by looking into the inside of the object V1 through the opening.

As shown in the lower portion of Fig. 14, the calibration processing unit 71 of the HMD 31 causes the display unit 54 to display a VR image or an AR image as an object V1' such that the opening of the cylindrical object V1 is in a direction to be able to be looked into from the right side in the figure.

As shown in the lower portion of Fig. 14, the user 21 moves to a position indicated by a user 21' and views the object V2 through the opening of the object V1' displayed on the display unit 54. Thereby, the calibration pattern displayed on the display unit 113 of the display device 33 is imaged from the observation position P(t31) of the camera 31a of the HMD 31 from the right-side range of the display device 33, which is the range Z1 shown in the upper portion of Fig. 14.

Therefore, the calibration pattern displayed on the display unit 113 of the display device 33 can estimate (measure) the camera parameters on the basis of a plurality of images imaged evenly from a plurality of directions with respect to the front direction of the display unit 113 of the display device 33. That is, by obtaining an optimum solution in which the distortion and the appearance of the calibration pattern are associated with each other, the correspondence between images can be estimated by the captured plurality of calibration patterns, and the position and orientation of the imaging unit 53 and the camera parameters can be estimated simultaneously. At this time, the estimation accuracy can be improved by using images captured from a plurality of directions.

As a result, by imaging the calibration pattern evenly from the plurality of directions, calibration can be performed more appropriately, and camera parameters can be estimated (measured) with higher accuracy.

### <Calibration pattern display state confirmation process in third modification>

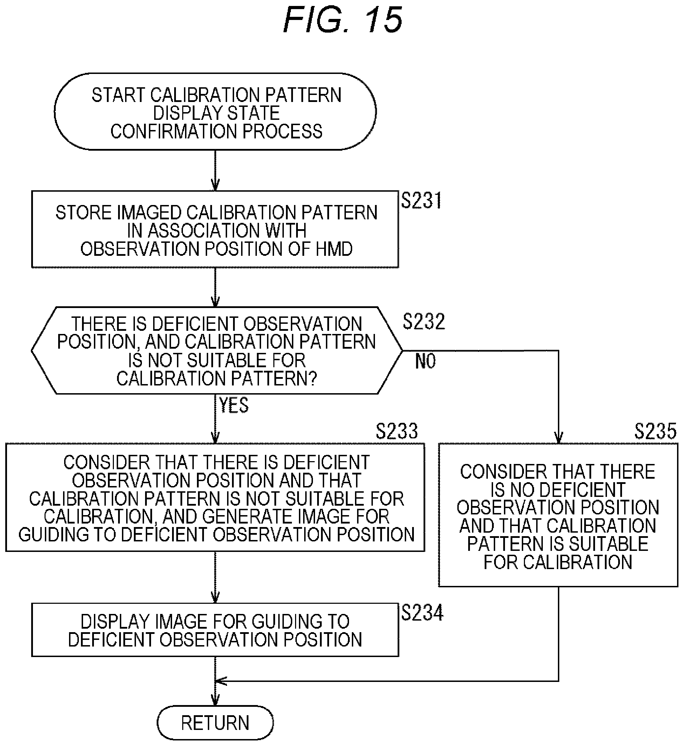

Next, a calibration pattern display state confirmation process in the third modification will be described with reference to a flowchart of Fig. 15.

In step S231, the calibration processing unit 71 detects (estimates) the position and orientation by simultaneous localization and mapping (SLAM) based on the image of the calibration pattern captured by the imaging unit 53 and displayed on the display device 33, and stores the position and orientation in the storage unit 55 in association with the calibration pattern captured by the camera 31a (imaging unit 53).

In step S232, the calibration processing unit 71 determines whether or not there is a deficient observation position on the basis of the information of the imaged calibration pattern stored in the storage unit 55 in association with the position and orientation.

When it is considered in step S232 that there is a deficient observation position, the process proceeds to step S233.

In step S233, the calibration processing unit 71 assumes that there is a deficient observation position and that the image is not suitable for calibration, and as described with reference to Fig. 14, the calibration processing unit 71 generates an image of content including a VR image or an AR image for guiding the position and orientation of the user 21 to the deficient observation position.

In step S234, the calibration processing unit 71 controls the display unit 54 so as to display the image of the content including the VR image or the AR image for guiding the position and orientation of the user 21 to the deficient observation position.

On the other hand, when it is considered in step S234 that there is no deficient observation position, the process proceeds to step S235.

In step S235, the calibration processing unit 71 considers that there is no deficient observation position, that an image of a plurality of calibration patterns required for calibration is uniformly imaged from a plurality of directions, and that the image is in the state suitable for calibration.

By the above process, calibration can be executed on the basis of the images in which the calibration pattern displayed by the display unit 113 of the display device 33 is imaged from the plurality of directions, and the camera parameters can be estimated (measured) with higher accuracy.

That is, in this case, in step S19 in the calibration process of Fig. 8, the calibration processing unit 71 can estimate (measure) the camera parameters with higher accuracy using the calibration patterns imaged by the camera 31a (imaging unit 53) from the plurality of observation positions.

Note that in the above, the example has been described where the VR image or the AR image are displayed to guide to the observation position deficient as the observation position of the camera 31a of the HMD 31, but at the time of adjusting the cameras 31a of the plurality of HMD 31 by using one display device 33, content for guiding the user wearing the HMD 31 may be displayed such that each of the cameras 31a of the plurality of HMD 31 does not block the visual field of the display device 33. In this way, the calibration pattern of the display device 33 can be imaged without making the user aware and blocking the field of view of each of the cameras 31a of the plurality of HMDs 31, and the calibration of the cameras 31a of the plurality of HMDs 31 can be performed. As a result, it is possible to appropriately estimate (measure) the camera parameters of the plurality of cameras 31a.

### <<6. Second Embodiment>>

In the above description, the example has been described where the calibration is performed by the calibration processing unit 71 of the control unit 51 in the HMD 31 to estimate (measure) the camera parameters of the camera 31a (imaging unit 53), but the calibration may be performed by a configuration other than the HMD 31, for example, the calibration may be performed by the information processor 32.

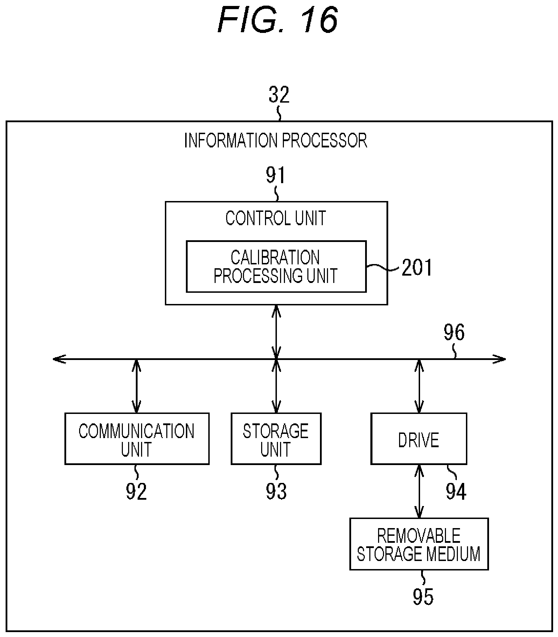

Fig. 16 shows a configuration example of the information processor 32 in a case where the calibration process is performed by the information processor 32. Note that in the information processor 32 of Fig. 16, components having the same functions as the components of the information processor 32 of Fig. 6 are denoted by the same reference numerals, and the descriptions thereof will be omitted as appropriate.

That is, the information processor 32 in Fig. 16 differs from the information processor 32 in Fig. 6 in that the calibration processing unit 201 is provided in the control unit 91. The calibration processing unit 201 basically has the same function as the calibration processing unit 71 of the HMD 31, estimates (measures) the camera parameters on the basis of the information of the position and orientation of the HMD 31 detected by the HMD 31, and supplies the results to the HMD 31.

Note that since the basic configurations of the HMD 31 and the display device 33 are the same as those described with reference to Figs. 4 and 6, the descriptions thereof will be omitted, but in the second embodiment, the calibration process is mainly performed by the information processor 32, the calibration processing unit 71 of the control unit 51 in the HMD 31 may be deleted.

### <Calibration process of second embodiment>

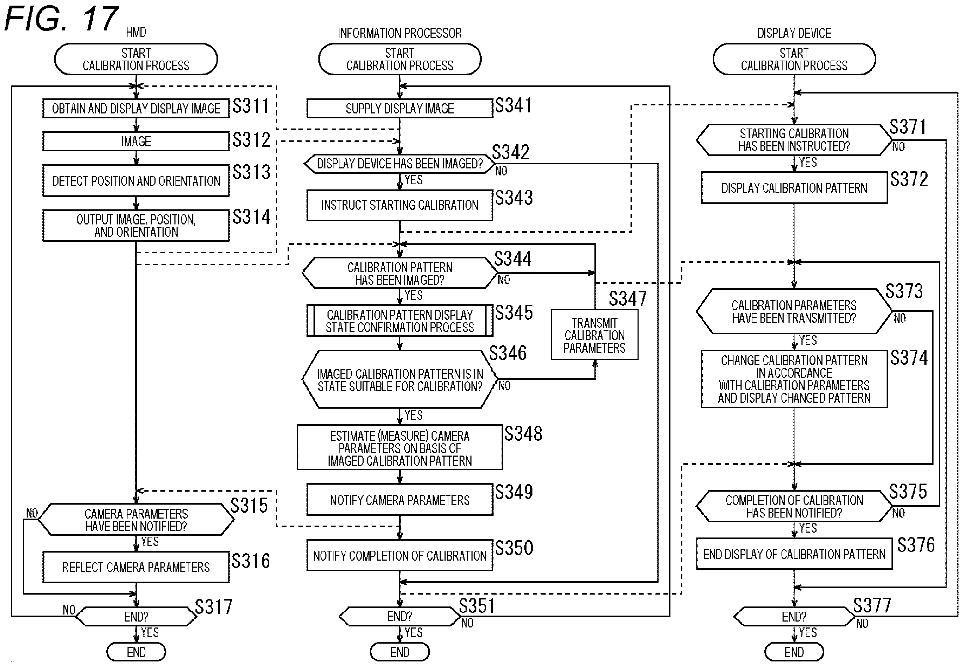

Next, a calibration process in the second embodiment will be described with reference to a flowchart of Fig. 17.

In step S341, the control unit 91 of the information processor 32 reads out the data of the content stored in the storage unit 93 or the removable storage medium 95 and controls the communication unit 92 so as to supply the data to the HMD 31.

In step S311, the content display processing unit 72 of the control unit 51 in the HMD 31 controls the communication unit 52 so as to obtain the data of the content supplied from the information processor 32 and also displays the content of the VR image or the AR image on the display unit 54 on the basis of the data of the content.

In step S312, the imaging unit 53 (camera 31a) images the scene in front of the user 21 wearing the HMD 31 and outputs the captured image to the control unit 51.

In step S313, the control unit 51 detects (estimates) the information of the position and orientation by simultaneous localization and mapping (SLAM) based on the image of the calibration pattern displayed on the display device 33, which is imaged by the imaging unit 53.

In step S314, the control unit 51 controls the communication unit 52 so as to transmit to the information processor 32 the information of the image captured by the camera 31a (imaging unit 53) and the position and orientation of the HMD 31.

In step S342, the calibration processing unit 201 of the control unit 91 controls the communication unit 92 so as to obtain the information of the image, the position, and the orientation transmitted from the HMD 31. Further, the calibration processing unit 201 analyzes the obtained image and determines whether or not the display device 33 is being imaged.

In step S342, when, for example, the display device 33 is considered as having been imaged, the process proceeds to step S343.

In step S343, the calibration processing unit 201 controls the communication unit 92 so as to instruct the display device 33 to start calibration.

In step S371, the display control unit 131 of the control unit 111 in the display device 33 controls the communication unit 112 so as to determine whether or not the instruction to start calibration from the information processor 32 has been supplied. When the start of calibration has been instructed in step S371, the process proceeds to step S372.

In step S372, the display control unit 131 reads out the image data of the calibration pattern stored in the storage unit 114 or the removable storage medium 116 and causes the display unit 113 to display the image data. At this time, the display control unit 131 displays the size of the marker in the read calibration pattern in the state of a default size.

That is, when the display device 33 is imaged by the imaging unit 53 corresponding to the camera 31a of the HMD 31, the calibration pattern is displayed on the display device 33.

On the other hand, in step S344, the calibration processing unit 201 of the information processor 32 determines whether or not the calibration pattern displayed by the display device 33 has been imaged on the basis of the image captured by the imaging unit 53 of the HMD 31 and repeats the same process until the image is imaged.

In step S344, when the calibration pattern is displayed on the display unit 113 of the display device 33 by the series of processes described above and the calibration pattern is thereby considered to have been imaged, the process proceeds to step S345.

In step S345, the calibration processing unit 201 executes a calibration pattern display state confirmation process and confirms the display state of the calibration pattern imaged by the imaging unit 53. Here, in a case where the calibration pattern is not suitable for calibration, the calibration processing unit 201 sets the size, brightness, and the like for displaying the calibration pattern suitable for calibration on the display device 33 and calculates corresponding parameters, as described with reference to Figs. 3 and 4.

Note that the calibration pattern display state confirmation process is basically the same as the process described with reference to the flowchart of Fig. 9, and hence the description thereof will be omitted. However, the process of obtaining the information of the position and orientation of the HMD 31 in step S91 is a process in place of the process of step S313 and will thus be omitted.

In step S346, the calibration processing unit 201 determines whether or not the imaged calibration pattern has been determined to be in the state suitable for calibration by the calibration pattern display state confirmation process.

When it is determined in step S346 that the imaged calibration pattern is not suitable for calibration, the process proceeds to step S347.

In step S347, the calibration processing unit 201 controls the communication unit 92 so as to transmit the calibration parameters to the display device 33, and the process returns to step S344.

In step S373, the display control unit 131 of the control unit 111 in the display device 33 controls the communication unit 112 so as to determine whether or not the calibration parameters, transmitted from the HMD 31 via the information processor 32, have been supplied. Then, when the calibration parameters have been supplied in step S373, the process proceeds to step S374.

In step S374, the display control unit 131 controls the communication unit 92 so as to obtain the calibration parameters, performs a process according to the calibration parameters on the calibration pattern stored by default, and displays the calibration pattern on the display unit 113.

When the calibration parameters have not been transmitted in step S373, the process of step S374 is skipped.

Further, in a case where the calibration pattern is not imaged in step S344, a similar process is repeated until the calibration pattern is imaged.

Moreover, in step S346, the processes of steps S344 to S347 are repeated until the calibration pattern is considered that the state is suitable for calibration. Thus, the processes of steps S344 to S347 are repeated in the information processor 32, the processes of steps S373 to S375 are repeated in the display device 33, the calibration parameters are repeatedly set, and the display of the calibration pattern continues to change.

Then, when it is considered in step S346 that the imaged calibration pattern is suitable for calibration, the process proceeds to step S348.

In step S348, the calibration processing unit 201 performs calibration on the basis of the imaged calibration pattern and estimates (measures) the camera parameters of the camera 31a, which is the imaging unit 53.

In step S349, the calibration processing unit 201 controls the communication unit 92 so as to notify the HMD 31 of the obtained camera parameters that is the result of the calibration.

In step S315, the control unit 51 controls the communication unit 52 so as to determine whether or not the camera parameters, which are the calibration result, have been notified by the information processor 32.

In step S315, when the camera parameters, which are the calibration result, have been notified by the information processor 32, the process proceeds to step S316.

In step S316, the control unit 51 reflects the notified camera parameters on the image captured by the imaging unit 53.

Here, in step S350, the calibration processing unit 201 controls the communication unit 92 so as to notify the display device 33 of the completion of calibration.

At this time, in step S375, the display control unit 131 determines whether or not the completion of calibration has been notified from the information processor 32, and when not notified, the process returns to step S373. That is, the processes of steps S373 to S375 are repeated until the completion of calibration is notified.

Then, when it is considered in step S375 that the completion of calibration is notified, the process proceeds to step S376.

In step S376, the display control unit 131 controls the communication unit 112 so as to obtain the notification of completion of calibration and ends the display of the calibration pattern on the display unit 113.

In step S317, the calibration processing unit 201 determines whether or not the end of the process has been instructed, and when the end has not been instructed, the process returns to step S311, and the subsequent processes are repeated. Note that when the camera parameters have not been notified in step S315, the process of step S316 is skipped.

Further, in step S351, the control unit 91 determines whether or not the end of the process has been instructed, and when the end has not been instructed, the process returns to step S341, and the subsequent processes are repeated. Note that when it is considered in step S342 that the display device 33 has not been imaged, the process proceeds to step S351.

Moreover, in step S377, the display control unit 131 determines whether or not the end of the process has been instructed, and when the end has not been instructed, the process returns to step S371, and the subsequent processes are repeated. Note that when it is considered in step S371 that the start of calibration has not been instructed, the process proceeds to step S377.

Then, when the end is instructed in each of steps S317, S351, and S377, the calibration process ends.

By the above process, it is in a state where the content including the VR image or the AR image is displayed on the display unit 54 of the HMD 31, and the user 21 is viewing the content, but independently of this state, the calibration process of the camera parameters of the camera 31a (imaging unit 53) is achieved.

As a result, it is possible to estimate (measure) the camera parameters of the camera 31a (imaging unit 53) without the user 21 being aware. Also, at this time, the display size of the calibration pattern displayed on the display device 33 and imaged by the imaging unit 53 is displayed in a state adjusted to the size suitable for calibration, whereby appropriate estimation (measurement) of the camera parameters can be achieved.

### <<7. Third Embodiment>>

In the above description, the example has been described where the calibration is performed by the calibration processing unit 201 of the information processor 32 to estimate (measure) the camera parameters of the camera 31a (imaging unit 53), but the calibration may be performed by the display device 33.

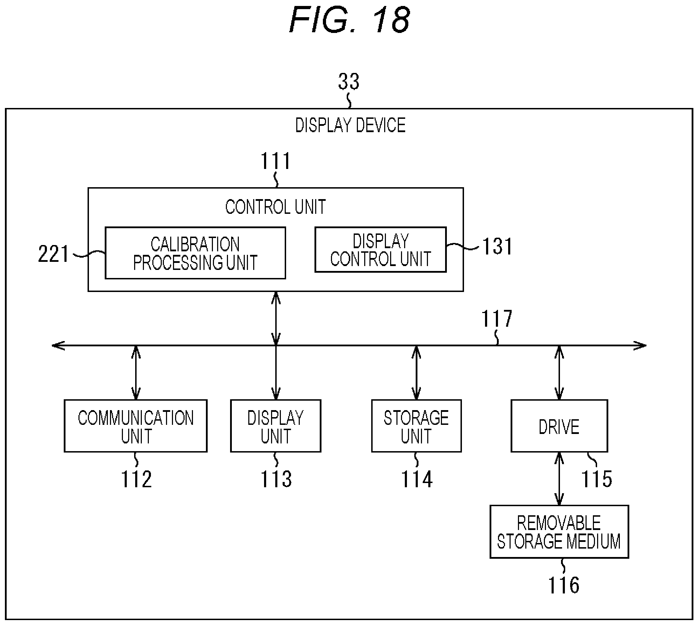

Fig. 18 shows a configuration example of the display device 33 in a case where calibration is performed by the display device 33. Note that in the display device 33 of Fig. 18, components having the same functions as the components of the display device 33 of Fig. 7 are denoted by the same reference numerals, and the descriptions thereof will be omitted as appropriate.

That is, the display device 33 in Fig. 18 differs from the display device 33 in Fig. 7 in that the calibration processing unit 221 is provided in the control unit 111. The calibration processing unit 221 basically has the same function as the calibration processing unit 71 of the HMD 31, performs calibration on the basis of the information of the position and orientation of the HMD 31 detected by the HMD 31, estimates (measures) the camera parameters, and supplies the results to the HMD 31.

Note that since the basic configurations of the HMD 31 and the information processor 32 are the same as those described with reference to Figs. 4 and 5, the description thereof will be omitted, but in the third embodiment, since the calibration process is mainly performed by the display device 33, the calibration processing unit 71 of the control unit 51 in the HMD 31 may be deleted.

### <Calibration process of the third embodiment>

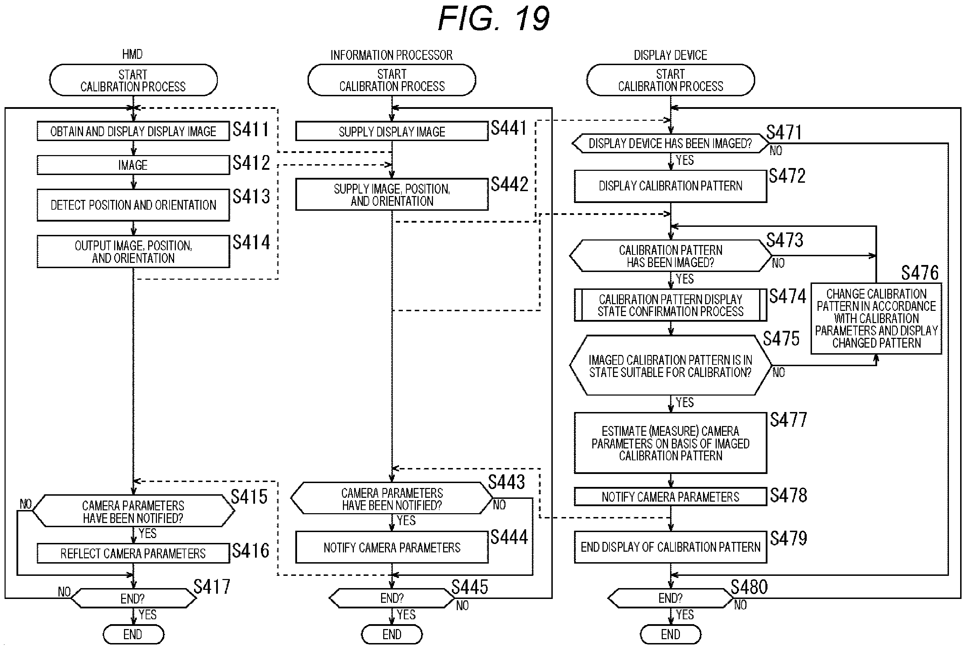

Next, a calibration process in a third embodiment will be described with reference to a flowchart of Fig. 19.

In step S441, the control unit 91 of the information processor 32 reads out the data of the content stored in the storage unit 93 or the removable storage medium 95 and controls the communication unit 92 so as to supply the data to the HMD 31.

In step S411, the content display processing unit 72 of the control unit 51 in the HMD 31 controls the communication unit 52 so as to obtain the data of the content supplied from the information processor 32 and also displays the content of the VR image or the AR image on the display unit 54 on the basis of the data of the content.

In step S412, the imaging unit 53 (camera 31a) images the scene in front of the user 21 wearing the HMD 31 and outputs the captured image to the control unit 51.

In step S413, the control unit 51 detects (estimates) the information of the position and orientation by simultaneous localization and mapping (SLAM) based on the image of the calibration pattern displayed on the display device 33, which is imaged by the imaging unit 53.

In step S414, the control unit 51 controls the communication unit 52 so as to transmit to the information processor 32 the information of the image captured by the camera 31a (imaging unit 53) and the position and orientation of the HMD 31.

In step S442, the control unit 91 controls the communication unit 92 so as to obtain the information of the image, the position, and the orientation transmitted from the HMD 31 and transmits the information to the display device 33.

In step S471, the calibration processing unit 221 of the control unit 111 controls the communication unit 112 so as to obtain the information of the image captured by the camera 31a (imaging unit 53) and the position and the position and orientation of the HMD 31. Then, the calibration processing unit 221 analyzes the obtained image and determines whether or not the display device 33 has been imaged.

In step S471, when, for example, the display device 33 is considered as having been imaged, the process proceeds to step S472.

In step S472, the calibration processing unit 221 controls the display control unit 131 so as to read out the image data of the calibration pattern stored in the storage unit 114 or the removable storage medium 116 and causes the display unit 113 to display the image data. At this time, the display control unit 131 displays the size of the marker in the read calibration pattern in the state of a default size.

That is, when the display device 33 is imaged in the imaging unit 53 corresponding to the camera 31a of the HMD 31, calibration is started, and a calibration pattern is displayed on the display device 33.

On the other hand, in step S473, the calibration processing unit 221 of the display device 33 determines whether or not the calibration pattern displayed by the display device 33 has been imaged on the basis of the image captured by the imaging unit 53 of the HMD 31 and repeats the same process until the image is imaged.

In step S473, when the calibration pattern is displayed on the display unit 113 of the display device 33 by the series of processes described above and the calibration pattern is thereby considered to have been imaged, the process proceeds to step S474.

In step S474, the calibration processing unit 221 executes a calibration pattern display state confirmation process and confirms the display state of the calibration pattern imaged by the imaging unit 53. Here, in a case where the calibration pattern is not suitable for calibration, the calibration processing unit 221 sets the size, brightness, and the like for displaying the calibration pattern suitable for calibration on the display device 33 and calculates corresponding calibration parameters, as described with reference to Figs. 3 and 4.

Note that the calibration pattern display state confirmation process is basically the same as the process described with reference to the flowchart of Fig. 9, and hence the description thereof will be omitted. However, the process of obtaining the information of the position and orientation of the HMD 31 in step S91 is a process in place of the process of step S413 and will thus be omitted.

In step S475, the calibration processing unit 221 determines whether or not the imaged calibration pattern has been determined to be in the state suitable for calibration by the calibration pattern display state confirmation process.

When it is determined in step S475 that the imaged calibration pattern is not suitable for calibration, the process proceeds to step S476.

In step S476, the calibration processing unit 221 performs a process according to the calibration parameters on the calibration pattern stored by default. Then, the display control unit 131 causes the display unit 113 to display the calibration pattern processed according to the calibration parameters.

In step S475, the processes of steps S473 to S476 are repeated until the calibration pattern is considered that the state is suitable for calibration, and the calibration parameters are repeatedly set, and the calibration pattern is displayed while the size and brightness of the calibration pattern is changed.

Then, when it is considered in step S475 that the imaged calibration pattern is suitable for calibration, the process proceeds to step S477.

In step S477, the calibration processing unit 221 performs calibration on the basis of the imaged calibration pattern and estimates (measures) the camera parameters of the camera 31a, which is the imaging unit 53.

In step S478, the calibration processing unit 221 controls the communication unit 112 so as to notify the HMD 31 of the completion of the calibration together with the obtained camera parameters, which are the result of the calibration, via the information processor 32.

In step S443, the control unit 91 controls the communication unit 92 so as to determine whether or not the completion of calibration has been transmitted from the display device 33 together with the camera parameters which are the result of calibration.

In step S443, when the completion of calibration is transmitted from the information processor 32 together with the camera parameters which are the result of calibration, the process proceeds to step S444.

In step S444, the control unit 91 controls the communication unit 92 so as to obtain the completion of the calibration together with the obtained camera parameters which are the result of the calibration notified from the display device 33 and notifies the HMD 31 of the completion.

In step S415, the control unit 51 controls the communication unit 52 so as to determine whether or not the completion of the calibration has been notified from the information processor 32 together with the obtained camera parameters which are the result of the calibration and repeats a similar process until the completion is notified. Then, when the completion of the calibration is notified together with the obtained camera parameters which are the result of the calibration in step S415, the process proceeds to step S416.

In step S416, the control unit 51 controls the communication unit 52 so as to obtain the completion of calibration together with the transmitted camera parameters and reflects the obtained camera parameters on the image captured by the imaging unit 53.

In step S417, the control unit 51 determines whether or not the end of the process has been instructed, and when the end has not been instructed, the process returns to step S411, and the subsequent processes are repeated. Note that when the camera parameters and the completion of calibration have not been notified in step S415, the process of step S416 is skipped.

Further, in step S445, the control unit 91 determines whether or not the end of the process has been instructed, and when the end has not been instructed, the process returns to step S441, and the subsequent processes are repeated. Note that when it is considered in step S443 that the camera parameters and the completion of calibration have not been notified, the process of step S444 is skipped.

Moreover, in step S480, the calibration processing unit 221 determines whether or not the end of the process has been instructed, and when the end has not been instructed, the process returns to step S471, and the subsequent processes are repeated. Note that when the display device 33 has not been imaged in step S471, the process proceeds to step S480.

Then, when the end is instructed in each of steps S417, S445, and S480, the calibration process ends.

By the above process, it is in a state where the content including the VR image or the AR image is displayed on the display unit 54 of the HMD 31, and the user 21 is viewing the content, but independently of this state, the calibration process of the camera parameters of the camera 31a (imaging unit 53) is achieved.

As a result, it is possible to estimate (measure) the camera parameters of the camera 31a (imaging unit 53) without the user 21 being aware. Also, at this time, the display size and brightness of the calibration pattern displayed on the display device 33 and imaged by the imaging unit 53 are displayed in a state adjusted to the size and brightness suitable for calibration, whereby appropriate estimation (measurement) of the camera parameters can be achieved.

Note that although the calibration system made up of the HMD 31, the information processor 32, and the display device 33 has been described above, the calibration system made up of the HMD 31 and the display device 33 may be achieved by integrating the HMD 31 with the information processor 32 so as to also achieve the process of the information processor 32 in the HMD 31 or by integrating the display device 33 with the information processor 32 so as to also achieve the process of the information processor 32 in the display device 33.

### <<8. Example of execution by software >>

The series of processes described above can be executed by hardware but can also be executed by software. In a case where a series of processes are executed by software, a program constituting the software is installed from a recording medium to a computer incorporated in dedicated hardware, a general-purpose computer, for example, which is capable of executing various functions by installation of various programs, or the like.

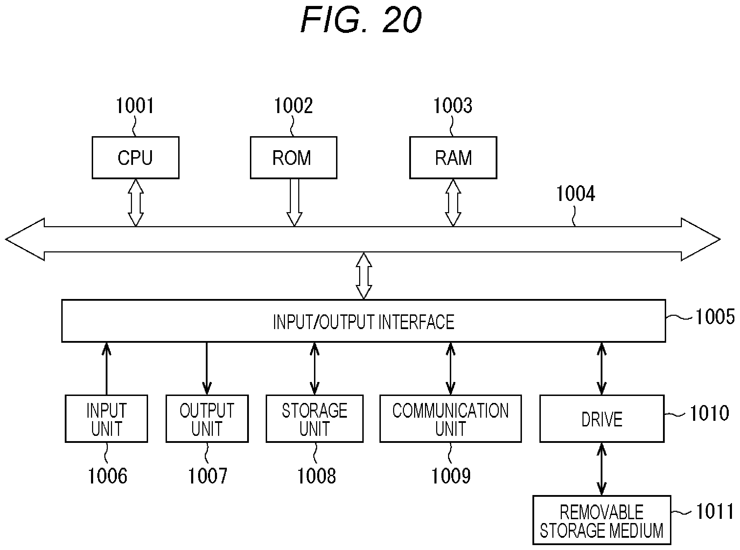

Fig. 20 shows a configuration example of the general-purpose computer. This personal computer incorporates a central processing unit (CPU) 1001. An input/output interface 1005 is connected to the CPU 1001 via a bus 1004. A read only memory (ROM) 1002 and a random access memory (RAM) 1003 are connected to the bus 1004.

The following units are connected to the input/output interface 1005: an input unit 1006 including an input device, such as a keyboard and a mouse, that inputs operation commands by a user; an output unit 1007 for outputting a process operation screen and an image of a process result to a display device; a storage unit 1008 including a hard disk drive and the like that stores a program and various pieces of data; and a communication unit 1009 that includes a local area network (LAN) adapter and the like and executes a communication process via a network represented by the Internet. In addition, a drive 1010 for reading and writing data from and to a removable storage medium 1011 is connected, the medium being a magnetic disk (including flexible disk), an optical disc (including compact disc-read only memory (CD-ROM) and digital versatile disc (DVD)), a magnetooptical disc (including mini disc (MD)), a semiconductor memory, or the like.

The CPU 1001 executes various processes in accordance with a program stored in the ROM 1002 or a program read out from the removable storage medium 1011 such as a magnetic disk, an optical disc, a magnetooptical disc, or a semiconductor memory, installed in the storage unit 1008, and loaded into the RAM 1003 from the storage unit 1008. The RAM 1003 also appropriately stores, for example, data necessary for the CPU 1001 to execute various processes.

In the computer configured as described above, for example, the CPU 1001 loads a program stored in the storage unit 1008 into the RAM 1003 via the input/output interface 1005 and the bus 1004 and executes the program, thereby executing the series of processes described above.

A program to be executed by the computer (CPU 1001) can be provided by recording the program on a removable storage medium 1011 such as a package medium, for example. Further, the program may also be provided via a wired or wireless transmission medium, such as a local area network, the Internet, or digital satellite broadcasting.

In the computer, the program can be installed in the storage unit 1008 via the input/output interface 1005 by mounting the removable storage medium 1011 on the drive 1010. Also, the program can be received by the communication unit 1009 via the wired or wireless transmission medium and installed in the storage unit 1008. In addition, the program can be installed in advance in the ROM 1002 or the storage unit 1008.

Note that the program executed by the computer may be a program in which a process is executed in time series in accordance with the order described in the present specification or may be a program in which a process is executed in parallel or at a necessary timing such as when a call is made.

Note that the CPU 1001 in Fig. 20 achieves the functions of the control unit 51 in Fig. 5, the control unit 91 in Figs. 6 and 16, and the control unit 111 in Figs. 7 and 18.

Further, in the present specification, a system means a set of a plurality of components (devices, modules (parts), etc.) and does not matter whether or not all the components are in the same housing. Therefore, a plurality of devices housed in separate housings and connected via a network, and one device housing a plurality of modules in one housing are both systems.

Note that the embodiments of the present disclosure are not limited to the embodiments described above, and various modifications can be made without departing from the scope of the present disclosure.

For example, the present disclosure can be configured as cloud computing in which one function is shared by a plurality of devices via a network and processed jointly.

Further, each of the steps described in the above flowchart can be executed by one device or by a plurality of devices.

Moreover, in a case where a plurality of processes is included in one step, the plurality of processes included in the one step can be executed by one device or by shared and executed by a plurality of devices.

Note that the present disclosure can be configured as follows:
<1> A head mounted display including:
   a display unit;
   an imaging unit that images an outside; and
   a calibration processing unit that generates a calibration image suitable for calibration and causes external display equipment to display the calibration image.
<2> The head mounted display according to <1>, in which
   the calibration processing unit generates the calibration image on the basis of a positional relationship between the head mounted display and the external display equipment.
<3> The head mounted display according to <2>, in which
   the calibration processing unit generates the calibration image on the basis of positional information of the head mounted display and positional information of the external display equipment.
<4> The head mounted display according to <3>, in which
   the calibration processing unit adjusts a size of the calibration image and generates the calibration image in accordance with a distance between the head mounted display and the external display equipment.
<5> The head mounted display according to <4>, in which
   the calibration processing unit adjusts the size of the calibration image to a large extent when the distance between the head mounted display and the external display equipment is greater than a predetermined distance.
<6> The head mounted display according to <2>, in which
   the calibration processing unit generates the calibration image on the basis of orientation information of the head mounted display and orientation information of the external display equipment.
<7> The head mounted display according to <6>, in which
   the calibration processing unit adjusts a size of the calibration image and generates the calibration image in accordance with an angle formed by an imaging direction of the imaging unit and a surface direction of the external display equipment.
<8> The head mounted display according to <7>, in which
   the calibration processing unit adjusts the size of the calibration image with respect to a direction in which the formed angle is formed.
<9> The head mounted display according to <8>, in which
   when the formed angle is larger than a predetermined angle, the calibration processing unit adjusts the size of the calibration image to a large extent with respect to the direction in which the formed angle is formed.
<10> The head mounted display according to <2>, in which
   the calibration processing unit estimates camera parameters of the imaging unit by using the calibration image captured by the imaging unit and displayed by the external display equipment.
<11> The head mounted display according to <10>, in which
   in a case where the calibration processing unit estimates the camera parameters on the basis of a plurality of images of the calibration images captured by the imaging unit and displayed by the external display equipment, the calibration processing unit causes the display unit to display an image that guides a user wearing the head mounted display so that imaging is performed from a direction in which imaging has not been performed by the imaging unit among imaging directions of the imaging unit with respect to a surface direction of the external display equipment when the imaging directions of the imaging unit with respect to the surface direction of the external display equipment are imbalanced for the plurality of images.
<12> The head mounted display according to <11>, in which
   in a case where the calibration processing unit estimates the camera parameters of each of the imaging units of a plurality of the head mounted displays, the calibration processing unit causes the display unit to display an image that guides the user wearing the head mounted display so that the calibration image displayed by the external display equipment is able to be captured without overlapping of each of the plurality of the imaging units.
<13> The head mounted display according to <2>, in which
   the calibration processing unit generates the calibration image on the basis of brightness of the calibration image captured by the imaging unit and displayed by the external display equipment.
<14> The head mounted display according to <13>, in which
   the calibration processing unit reduces the brightness of the calibration image captured by the imaging unit and displayed by the external display equipment in a case where there are more than a predetermined number of pixels with saturated brightness in the calibration image displayed by the external display equipment, and the calibration processing unit increases the brightness of the calibration image captured by the imaging unit and displayed by the external display equipment in a case where there are more than a predetermined number of pixels with the lowest brightness in the calibration image displayed by the external display equipment.
<15> The head mounted display according to any one of <1> to <14>, in which
   the calibration processing unit generates the calibration image suitable for the calibration and causes the external display equipment to display the calibration image at a timing when the external display equipment is detected in an image captured by the imaging unit, at a timing when a predetermined time has elapsed, at a timing when a discrepancy occurs between an image to be originally imaged by the imaging unit and an image actually imaged by the imaging unit on the basis of positional information of the head mounted display and on the basis of camera parameters of the imaging unit, or at a timing when the user requests the calibration.
<16> The head mounted display according to any one of <1> to <15>, in which
   the calibration image is an image including a marker in a predetermined shape or an image including a marker colored in a predetermined color arrangement.
<17> The head mounted display according to any one of <1> to <16>, in which
   the calibration image is an image displayed at a predetermined timing in content including a moving image.
<18> A control method for a head mounted display including a display unit and an imaging unit that images an outside, the method including
   a calibration process of generating a calibration image suitable for calibration and causing external display equipment to display the calibration image.
<19> A program for causing a computer controlling a head mounted display, which includes a display unit and an imaging unit that images an outside,
   to function as a calibration processing unit that generates a calibration image suitable for calibration and causes external display equipment to display the calibration image.
<20> An information processor for supplying content to a head mounted display including a display unit and an imaging unit that images an outside, the information processor including
   a calibration processing unit that generates a calibration image suitable for calibration and causes external display equipment to display the calibration image.
<21> A display device for displaying a calibration image of an imaging unit that images an outside in a head mounted display including a display unit and the imaging unit, the display device including
   a calibration processing unit that generates a calibration image suitable for calibration and causes the display device to display the calibration image.

### REFERENCE SIGNS LIST

- 11: Calibration system
- 31: HMD (Head Mounted Display)
- 31a: Camera
- 32: Information processor
- 33: Display device
- 51: Control unit
- 52: Communication unit
- 53: Imaging unit
- 54: Display unit
- 55: Storage unit
- 56: Drive
- 57: Removable storage media
- 60: Bus
- 71: Calibration control unit
- 72: Content display processing unit
- 91: Control unit
- 92: Communication unit
- 93: Storage unit
- 94: Drive
- 95: Removable storage media
- 96: Bus
- 111: Control unit
- 112: Communication unit
- 113: Display unit
- 114: Storage unit
- 115: Drive
- 116: Removable storage media
- 131: Display control unit
- 201, 221: Calibration processing unit

## Claims

1. A head mounted display comprising:
a display unit;
an imaging unit that images an outside; and
a calibration processing unit that generates a calibration image suitable for calibration and causes external display equipment to display the calibration image.

2. The head mounted display according to claim 1, wherein
the calibration processing unit generates the calibration image on a basis of a positional relationship between the head mounted display and the external display equipment.

3. The head mounted display according to claim 2, wherein
the calibration processing unit generates the calibration image on a basis of positional information of the head mounted display and positional information of the external display equipment.

4. The head mounted display according to claim 3, wherein
the calibration processing unit adjusts a size of the calibration image and generates the calibration image in accordance with a distance between the head mounted display and the external display equipment.

5. The head mounted display according to claim 4, wherein
the calibration processing unit adjusts the size of the calibration image to a large extent when the distance between the head mounted display and the external display equipment is greater than a predetermined distance.

6. The head mounted display according to claim 2, wherein
the calibration processing unit generates the calibration image on a basis of orientation information of the head mounted display and orientation information of the external display equipment.

7. The head mounted display according to claim 6, wherein
the calibration processing unit adjusts a size of the calibration image and generates the calibration image in accordance with an angle formed by an imaging direction of the imaging unit and a surface direction of the external display equipment.

8. The head mounted display according to claim 7, wherein
the calibration processing unit adjusts the size of the calibration image with respect to a direction in which the formed angle is formed.

9. The head mounted display according to claim 8, wherein
when the formed angle is larger than a predetermined angle, the calibration processing unit adjusts the size of the calibration image to a large extent with respect to the direction in which the formed angle is formed.

10. The head mounted display according to claim 2, wherein
the calibration processing unit estimates camera parameters of the imaging unit by using the calibration image captured by the imaging unit and displayed by the external display equipment.

11. The head mounted display according to claim 10, wherein
in a case where the calibration processing unit estimates the camera parameters on a basis of a plurality of images of the calibration images captured by the imaging unit and displayed by the external display equipment, the calibration processing unit causes the display unit to display an image that guides a user wearing the head mounted display so that imaging is performed from a direction in which imaging has not been performed by the imaging unit among imaging directions of the imaging unit with respect to a surface direction of the external display equipment when the imaging directions of the imaging unit with respect to the surface direction of the external display equipment are imbalanced for the plurality of images.

12. The head mounted display according to claim 11, wherein
in a case where the calibration processing unit estimates the camera parameters of each of the imaging units of a plurality of the head mounted displays, the calibration processing unit causes the display unit to display an image that guides the user wearing the head mounted display so that the calibration image displayed by the external display equipment is able to be captured without overlapping of each of the plurality of the imaging units.

13. The head mounted display according to claim 2, wherein
the calibration processing unit generates the calibration image on a basis of brightness of the calibration image captured by the imaging unit and displayed by the external display equipment.

14. The head mounted display according to claim 13, wherein
the calibration processing unit reduces the brightness of the calibration image captured by the imaging unit and displayed by the external display equipment in a case where there are more than a predetermined number of pixels with saturated brightness in the calibration image displayed by the external display equipment, and increases the brightness of the calibration image captured by the imaging unit and displayed by the external display equipment in a case where there are more than a predetermined number of pixels with the lowest brightness in the calibration image displayed by the external display equipment.

15. The head mounted display according to claim 1, wherein
the calibration processing unit generates the calibration image suitable for the calibration and causes the external display equipment to display the calibration image at a timing when the external display equipment is detected in an image captured by the imaging unit, at a timing when a predetermined time has elapsed, at a timing when a discrepancy occurs between an image to be originally imaged by the imaging unit and an image actually imaged by the imaging unit on a basis of positional information of the head mounted display and on a basis of camera parameters of the imaging unit, or at a timing when a user requests the calibration.

16. The head mounted display according to claim 1, wherein
the calibration image is an image including a marker in a predetermined shape or an image including a marker colored in a predetermined color arrangement.

17. The head mounted display according to claim 1, wherein
the calibration image is an image displayed at a predetermined timing in content including a moving image.

18. A control method for a head mounted display including a display unit and an imaging unit that images an outside, the method comprising
a calibration process of generating a calibration image suitable for calibration and causing external display equipment to display the calibration image.

19. A program for causing a computer controlling a head mounted display, which includes a display unit and an imaging unit that images an outside,
to function as a calibration processing unit that generates a calibration image suitable for calibration and causes external display equipment to display the calibration image.

20. An information processor for supplying content to a head mounted display including a display unit and an imaging unit that images an outside, the information processor comprising
a calibration processing unit that generates a calibration image suitable for calibration and causes external display equipment to display the calibration image.

21. A display device for displaying a calibration image of an imaging unit that images an outside in a head mounted display including a display unit and the imaging unit, the display device comprising
a calibration processing unit that generates the calibration image suitable for calibration and causes the display device to display the calibration image.
